# EUROPEAN PATENT SPECIFICATION

(11) **EP 0 759 595 B1**
(45) Date of publication and mention of the grant of the patent: **12.12.2001**
(21) Application number: 96113093.7
(22) Date of filing: 14.08.1996
(51) Int. Cl.: G06F 17/21, H04N 1/38, H04N 1/62

(54) **Document processing system**
Dokumentverarbeitungssystem
Système de traitement de documents

(30) Priority: 18.08.1995 JP 23206095
(43) Date of publication of application: 26.02.1997
(73) Proprietor: FUJI XEROX CO., LTD., Minato-ku, Tokyo (JP)
(72) Inventor: Toju, Yasuko, Edogawa-ku, Tokyo (JP); Hayashi, Naoki, Ashigarakami-gun, Kanagawa (JP)
(74) Representative: Hoffmann, Eckart, Dipl.-Ing.

(56) References cited:
- EP-A- 0 349 780
- EP-A- 0 454 964
- EP-A- 0 501 814
- WO-A-81/02482
- WO-A-91/08642

## Description

The invention is directed to a document processing system. In particularly, the invention is directed to a color document producing system, which can process multiple colors. The system may be a word-processor, digital copy machine, and the like.

Recently developed word-processors and document editors, such as those in workstations, have made it relatively easy to produce color documents. They enhance document creation functions, enable easy creation of multicolor documents and print color documents.

To make a document easy to read, some parts of the document are made conspicuous so they stand out. Alternatively, some parts of the document are made to be distinct from others, such as by using multiple colors or multiple monochrome shapes. Specifically, characters or underlined portions that are to be conspicuous can be colored, the background of these portions can be colored, or a different font or character size can be used in a monochrome document. Other alternatives include the character ornamentation, i.e., underlining, background ornamentation, color inversion between the foreground and background; and different kinds of lines may be used. Further, these schemes may be combined. EP-A-0 349 780 discloses a color image processing system for extracting an outline of an input image and a color converting section for converting the color of the outline extracted into a predetermined color. This system is capable of emphasizing a pattern such as a character or graphic pattern.

However, a scheme for emphasis and distinction of a document is dependent of each document creating system's performance. The system can consist of a document entry and editing unit, such as a word-processor, and an output unit, such as a printer. For example, a document entered and edited with a monochrome word-processor cannot yield a color-printed document, even with a color printer. A document entered and edited with a color word-processor cannot yield a color-printed document with a monochrome printer.

To overcome these problems, an information delivery system has been proposed for processing a monochrome document, with symbolic commands for color change for underlines and other areas of document being written on it. As described in Japanese Patent Publication No. 62-222294 (JP 294), a document can be created by changing color for portions specified by command symbols. This system allows a user to print a color document from an original monochrome document.

However, the system of JP 294 has several problems. When a document, with symbolic commands written on it to change color of certain portions is printed as a monochrome document, the command symbols are printed as part of the document. The JP 294 system can only perform monochrome-to-color conversion, and cannot produce a monochrome document from an original color document. When a multicolor document input unit and a monochrome printer are available, the multicolor function of the document input unit will not be used. Although this system can emphasize and distinguish document portions based on a multicolor scheme based on a multi-shape ornamentation scheme, it cannot add a multi-shape scheme to a document created according to a multicolor ornamentation scheme.

This invention is intended to solve the foregoing problems. One aspect of the invention is to provide a document processing system that can operate to easily switch a scheme to emphasize and distinguish a document content from a multicolor scheme to a monochrome multi-shape scheme and vice versa. The system can produce a document in which special command symbols are not needed.

Another aspect of the invention is to provide a document processing system that can operate to add a multicolor scheme and/or monochrome multi-shape scheme to emphasize and distinguish document content in addition to an existing scheme in a document.

In order to achieve the above and other aspects, the document processing system can comprise element information register means, which can store first information and second information to determine the visual features of a document element; first default value register means, which can store a default value of the first information; discrimination means, which can detect whether the first information of the document element that is stored by the element information register means is different from the default value; and setting means, which sets the second information for a document element with first information being different from the default value.

Another aspect of the invention provides document processing system that can comprise an element information register means, which can store first and second information to determine the visual features of a document element; first default value register means, which can store a default value for the first information; second default value register means, which can store a default value for the second information; discrimination means, which can detect whether the first information of a document element stored by the element information register means is different from the default value; and setting means, which can set the second information as a value other than the default value for a document element with first information that is different from the default value.

The setting means can set the second information for a document element with first information that is different from the default value. It can also set the first information of the document element as a default value.

The document processing system can further include document layout means, which can alter the layout of a document element in response to alteration of the first or second information for the document element stored in the element information register means.

The document processing system can further include first analysis means, which can determine a default value for the first information using the first information stored in the element information register means. The document processing system can also include a second analysis means, which can determine a default value for the second information using the second information stored in the element information register means.

According to the document processing system, the setting means can enable a user to specify, in an interactive manner, a correspondence between the first information, before the alteration (hereinafter "original"), and the first and second information after the alteration (hereinafter "revisional"). Thus, a further aspect of the document processing system provides a setting register means, which can store information indicative of a correspondence between the original first information and the revisional first and second information. The setting means can implement this setting using the information stored by the setting register means.

Another aspect of the document processing system is that a document element to be treated can be any of characters, a line of a figure, and a table, information to determine the visual feature of the document element can be characters, a shape and/or color of a line. The first information, which determines a visual feature of a document element, can pertain to a shape of the document element. The second information, which determines the visual feature of the document element, can pertain to a color of the document element. Alternatively, the first information can pertain to a color of the document element and the second information can pertain to a shape of the document element.

Another aspect of the document processing system is achieved by the element information register means storing the first and second information so as to determine visual features of a document element, and the first default value register means can store a default value for the first information. The identifying means can detect whether the first information of the document element, which is stored by the element information register means, is different from a default value. In response to the detection of difference, the setting means can then set the second information for a document element with first information that is different from the default value.

A further aspect of the document processing system is achieved by providing element information register means that can store first and second information to determine the visual features of a document element; the first default value register means that can store a default value for the first information; and second default value register means that can store a default value for the second information. The identifying means detects whether the first information for a document element stored by the element information register means is different from a default value. In response to a detected difference, the setting means can set a value, other than the default value, for the second information of a document element with the first information being different from the default value. The setting means can also set the second information for a document element with first information that is different from the default value. It can also set the first information of the document element as a default value.

The document processing system can further include document layout means, which can alter the layout of a document element in response to alteration of the first or second information of the document element stored in the element information register means.

A further aspect of the document processing system is that it can include first analysis means, which can determine a default value of first information using first information stored in the element information register means. Alternately, the system can further include second analysis means, which can determine a default value of second information using the second information of the document element stored in the element information register means.

The setting means can enable a user to specify, in an interactive manner, a correspondence between original first information and revisional first and second information. The system can also include a setting register means that stores correspondence information. The setting means can then implement a setting using the information stored by the setting register means.

Yet another aspect of the document processing system permits possible switching of a scheme for emphasis and distinction of document elements in a document between a multicolor scheme and monochrome multi-shape scheme. Specifically, to switch from a monochrome multi-shape scheme to a multicolor scheme, revisional color and shape, other than the default value appearing in the document, are determined for a shape. The color and shape for the document element can be determined based on their correspondence. To switch from a multicolor scheme to a monochrome multi-shape scheme, a revisional shape and color, other than the default value appearing in the document, are determined for a color, and the color and shape for the document element can be determined based on their correspondence.

According to another aspect, it is possible to easily add multicolor scheme and monochrome multi-shape scheme to emphasize and distinguish document elements to an existing scheme already in the document. Specifically, to add a multicolor scheme to a document in which a monochrome multi-shape scheme is used, a revisional color, other than the default value appearing in the document, can be determined for a shape. A color of a document element can then be determined based on their correspondence.

To add a monochrome multi-shape scheme to a document, in which a multicolor scheme is used, revisional shapes, other than the default value appearing in the document, can be determined for a color. The shape of the document element can be determined based on their correspondence.

To switch or add schemes, a correspondence between an original color and shape and a revisional color and shape can be specified by a user. Alternatively, it can be determined based on correspondence information set in advance. Where alteration of a layout for a document element, i.e., characters and lines, is needed due to an alteration of shape, a re-layout process can take place.

Other objects, advantages and salient features of the invention will become apparent from the following detailed description, which, taken in conjunction with the annexed drawing, discloses preferred embodiments of the invention.

The invention will be described in detail with reference to the following drawings, in which like reference numerals refer to like elements and wherein:
Fig. 1 is a schematic block diagram of the document processing system based on the first embodiment of this invention;
Fig. 2 is a flowchart illustrating a process of a search processor;
Fig. 3 is a flowchart illustrating a process of a setting processor;
Fig. 4 is a diagram illustrating a first example of a user interface screen created by the setting processor;
Fig. 5 is a diagram illustrating a second example of a user interface screen created by the setting processor;
Fig. 6 is a flowchart illustrating an overall process for alteration of an emphasizing scheme;
Fig. 7 is a diagram explaining the process of adding a color scheme to a font scheme for an emphasizing scheme;
Fig. 8 is a diagram explaining a process of switching an emphasizing scheme from a color scheme to a font scheme;
Fig. 9 is a block diagram of the document processing system according to a second embodiment of this invention;
Fig. 10 is a diagram illustrating an example of an automatic setting table;
Fig. 11 is a flowchart illustrating a process of an automatic setting processor that uses the automatic setting table;
Fig. 12 is a flowchart illustrating a process of altering an emphasizing scheme by a document processing system of the second embodiment;
Fig. 13 is a block diagram of a document processing system according to a third embodiment of this invention;
Fig. 14 is a flowchart explaining a process for a distinction setting processor;
Fig. 15 is a flowchart illustrating an overall process of altering an emphasizing scheme according to a third embodiment of this invention;
Fig. 16 is a diagram illustrating an example of a user interface screen created by a setting processor according to a fourth embodiment of this invention;
Fig. 17 is a diagram explaining a process of switching an emphasizing scheme from a thickness scheme to a color scheme for lines of figures and tables;
Fig. 18 is a block diagram of a document processing system, such as a digital color copy machine, according to a fifth embodiment of this invention;
Fig. 19 is a diagram explaining a relation between a source document reading by an image input section and pixel data;
Fig. 20 is a diagram explaining detection of a thickness of a line by an extraction processor;
Fig. 21A is a flowchart illustrating an extraction processor for the fifth embodiment;
Fig. 21B is a flowchart illustrating a process of evaluating side lengths of a rectangular area by an extraction processor of the fifth embodiment;
Fig. 22 is a diagram explaining a data structure of extraction information stored by extraction information register means;
Fig. 23 is a flowchart showing the process of the default value determinator;
Fig. 24 is a diagram illustrating a conversion table in conversion information register means;
Fig. 25 is a flowchart illustrating a process of an discrimination processor;
Fig. 26 is a flowchart illustrating a process of an image color converter;
Fig. 27 is a diagram illustrating an example of information stored by calculation register means;
Fig. 28 is a flowchart illustrating a process of altering an emphasizing scheme based on the fifth embodiment;
Fig. 29 is a diagram explaining an example of switching an emphasizing scheme from a thickness scheme to a color scheme for a source document;
Fig. 30 is a block diagram of the document processing system, such as a digital color copy machine, according to a sixth embodiment of this invention;
Fig. 31 is a diagram showing an example of a conversion table in conversion information register means of the sixth embodiment;
Fig. 32 is a diagram explaining a data structure of extraction information stored by extraction information register means;
Fig. 33 is a flowchart illustrating a process of an image shape converter;
Fig. 34 is a flowchart illustrating a process altering an emphasizing scheme of the sixth embodiment;
Fig. 35 is a diagram explaining an example of switching an emphasizing scheme from a color scheme to a thickness scheme for a source document;
Fig. 36 is a diagram illustrating an example of a screen created by a system component for providing a user interface function that enters a correspondence between original key-marker values and revisional set-markers and key-marker values; and
Fig. 37 is a flowchart explaining a process of determining side lengths of a rectangular area of oblique line.

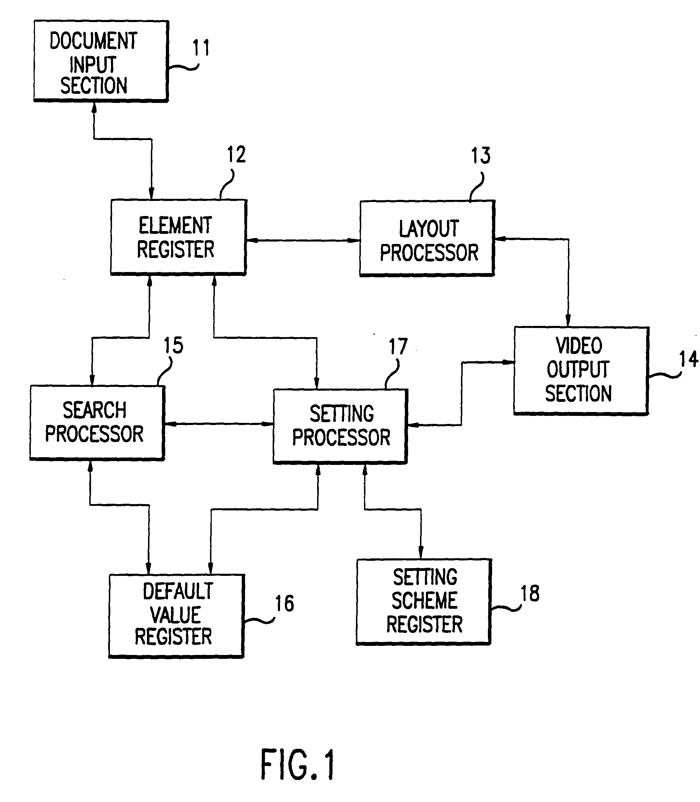

The embodiments of the invention will be explained in detail with reference to the drawings. Fig. 1 illustrates a configuration of major system components in the document processing system according to the first embodiment of this invention.

The system of Fig. 1 includes a document input section 11, an element register 12, a layout processor 13, a video output section 14, a search processor 15, a default value register 16, a setting processor 17, and a setting scheme register 18.

The document input section 11 receives a signal entered by the user, for example with a keyboard, mouse device or the like, to add a character or line to a source document. The document input section 11 also converts the signal into a string of codes.

The element register 12 stores a code string. The element register 12 also stores information relating to document elements and general restriction of element layout. The element register 12 also receives, interprets and executes alteration commands and information inquiries.

The element register 12 expresses each character of a document element with a set of attributes and values in terms of character code, shape and color. The element register 12 also stores a character information arrangement in the order it appears in the document. A character can be expressed in the form of a set of attribute and value data. Colors can take RGB values ranging from 0 to 100. For example, character "a" having a font of Mincho-type, a size of 10-point and a color of blue can be expressed by a set of data of attributes and values as:
{(category character), (code 1111), (font Mincho), (size 10-point), (color R = 0, G = 0, B = 50)}.

A character string "ao" made up of two characters "a" and "o" having codes 1111 and 1115, a font of Mincho, a size of 10-point and a color of blue can be expressed as: {(category character), (code 1111), (font Mincho), (size 10-point), (color R = 0, G = 0, B = 50)}, {(category character), (code 1115), (font Mincho), (size 10-point), (color R = 0, G = 0, B = 50)}.

The layout processor 13 calculates a layout of a document element based on document element information Stored by the element register 12 and information concerning a character string size derived from attribute value(s) of the document element stored by the video output section 14. The layout processor 13 also stores the result of calculation, which can have a form including a document element stored by the element register 12 and coordinate data for a rectangular area in which the document element is laid out.

For a layout of a character string, a position of a rectangular area used by the character string is determined based on first through third information, as follows. The calculation for the document layout is carried out again or "re-laid out" when information relating to the shape of character stored by the element register 12 is altered.
First information: Pertains to the number of characters and the shape of a character, such as the font and size. The first information is stored in the element register 12.
Second information: Pertains to a shape, such as the size of a character to be displayed. The second information is stored in the video output section 14.
Third information: Pertains to a restriction of layout of character on a page, in connection with a margin or the like. The third information is stored by the element register 12.

The video output section 14 implements a video output process to display a document image on a display device, such as a CRT display unit or the like. The video output section 14 stores image information derived from attribute values of a document element, reads out layout data for the document element from the layout processor 13, and delivers the document image to the display device, such as a CRT display unit.

Next, the search processor 15, default value register 16, setting processor 17 and setting scheme register 18 will be explained. The default value register 16 stores sets of a document element categories, key-markers and their default values. The key-marker for each category of document element must be stored in the element register 12. The key-marker is an attribute stored by the element register 12, and is defined as follows. Further, there is a visual feature of a document element named set-marker defined as follows.

Key-marker: Represents a visual feature to characterize a document element. The key-marker is used to alter an expression scheme for a document element, to determine whether a visual feature of the document element should be a default value.

Set-marker: Represents a visual feature to characterize a document element. The set-marker is used to alter an expression scheme for a document element, to visually distinguish whether a document element takes a default value after alteration or change.

The setting scheme register 18 stores a set of document element category(s) and set-marker(s). The set-marker is referenced or accessed by the setting processor 17 at value setting, which is a similar to an attribute. An arbitrary number of set-markers can be stored by the element register 12 for each category of document element.

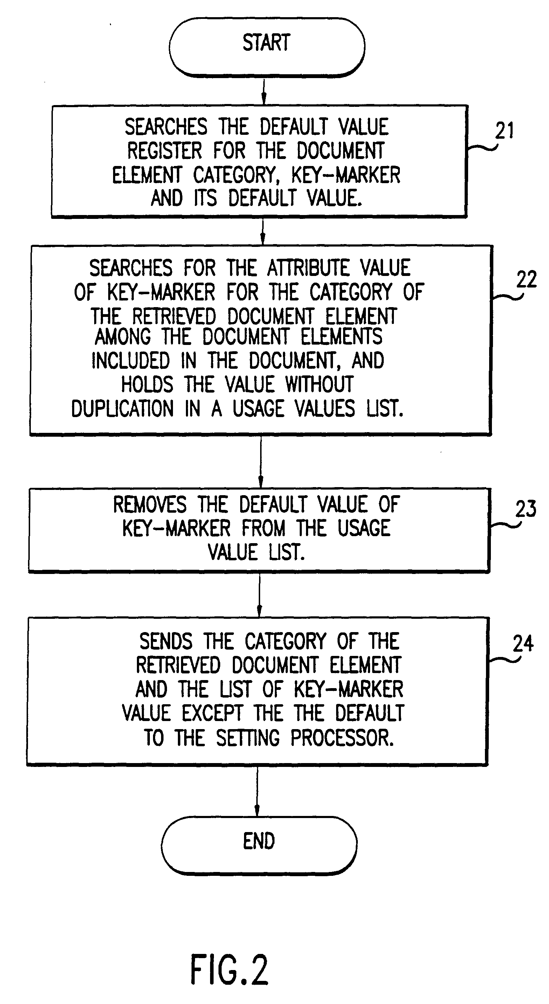

Fig. 2 illustrates a flowchart for operation of the search processor 15, which searches for attribute(s) and other parameters of a document element. Step 21 searches the default value register 16 for a document element category, key-marker and its associated default value. Step 22 searches the element register 12 for an attribute value of a key-marker that is relevant to the document element category retrieved from the default value register 16. The retrieved value is stored, without duplication, in a usage values list.

Step 23 removes a default value for key-marker from the usage value list produced in step 22. Step 24 sends the document element category of step 21, to the setting processor 17, and a list of key-marker values, except the default values of characters in the document (step 23). Consequently, a list that includes at least one document element category and key-marker value, except the default value, is created.

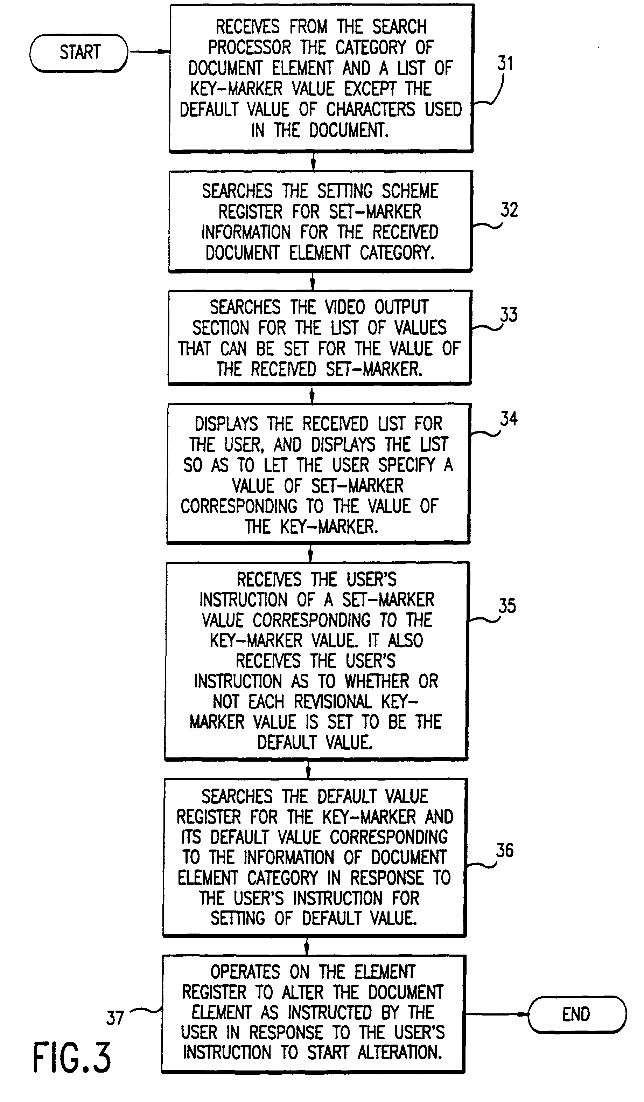

Fig. 3 illustrates a flowchart for operation of the setting processor 17. Step 31 receives a category of document element and a list of key-marker value, except a default value for characters used in the document from the search processor 15. Step 32 searches the setting scheme register 18 for set-marker information for the document element category determined in step 21.

Step 33 then searches the video output section 14 for a list of values that can be set for the set-marker value determined in step 32. Step 34 displays the list determined in step 31 to a user. Step 34 also displays the list determined in step 33, to let a user specify a set-marker value corresponding to a key-marker value.

Step 35 receives a user's instruction for a set-marker value that corresponds to a key-marker value. It also receives a user's instruction whether each revisional key-marker value is to be set as a default value. In response to the user's instruction, step 36 searches the default value register 16 for a key-marker and its associated default value that corresponds to the document element category information determined in step 31. In response to the user's instruction to start on commencement alteration, step 37 operates and alters the document element in the element register 12, as instructed by the user in step 35.

Specifically, the alteration or changing of the set-marker value to a value instructed by the user is applied to a character having relevant value of key-marker. If a user has instructed a key-marker value to be a default value, the key-marker value is designated as the default value, in addition to alteration of the set-marker value.

Next, an operation to switch or add a scheme for document emphasis and distinction will be explained, with reference to specific examples having two character expression forms of font and color used in a document.

A first example is adding a scheme for emphasis and distinction based on a color scheme to a scheme based on font. The default value register 16 stores information "character" as a category of document element. It also stores information "font" and "Mincho-type" as a key-marker and its associated default value. The setting scheme register 18 stores "character" as a document element category, and stores information "color" as a set-marker. In this example, the operation that puts "color" to characters with the default value is carried out. A user specifies a color as follows.

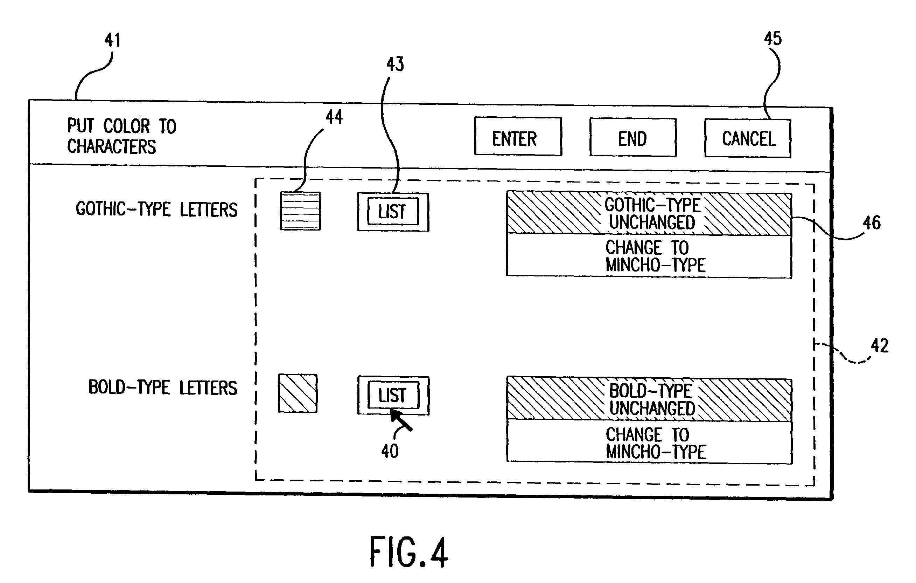

Fig. 4 illustrates a user interface screen created by the setting processor 17. To set character colors, values, other than the default value for key-markers values included in the document, are displayed on a left-hand section of a setting window 41. A user entry field 42, in which the user specifies color information for characters with key-markers other than a default value, is displayed on the right of the key-marker values. The user entry field 42 specifies whether the key-marker is to be a default value. Specifying whether the color placing operation for characters with a default value then can take place. The system is initialized to have no-color, i.e. blank, for a color information field color patch, and the selection of a non-default value for the key-marker.

A user specifies color information by specifying a color patch 44. In Fig. 4, a dual-frame field 43 that includes labels "list" is a color patch key that is pointed by the user to display a list of color patches. The list of color patches is displayed over the setting window 41 by the setting processor 17. When a user operates a mouse device to select one of color patches in the list with a pointer cursor 40 or points to a position outside the color patch, the color patch list goes off the display. The color selected by the user is displayed in a rectangular field of color patch 44 on the left of the color patch key field 43.

Next, a switching scheme for emphasis and distinction from a font scheme to a color scheme will be explained. This is similar to the addition of a color scheme to a font scheme explained previously, and only differs with respect to the selection field 42 in Fig. 4. The setting of a key-marker value to the default value is unconditionally selected by the operation of the setting processor 17.

Next, a switching scheme for emphasis and distinction from a color scheme to a font scheme will be explained. The default value register 16 stores information "character" for a document element category and stores information "color" for a key-marker. It also stores values R = 0, G = 0 and B = 0 for a color default value. The setting scheme register 18 stores information "character" for the document element category and information "font" for the set-marker. In adding or altering a font attribute for characters of a document element, the font attribute of the characters is set.

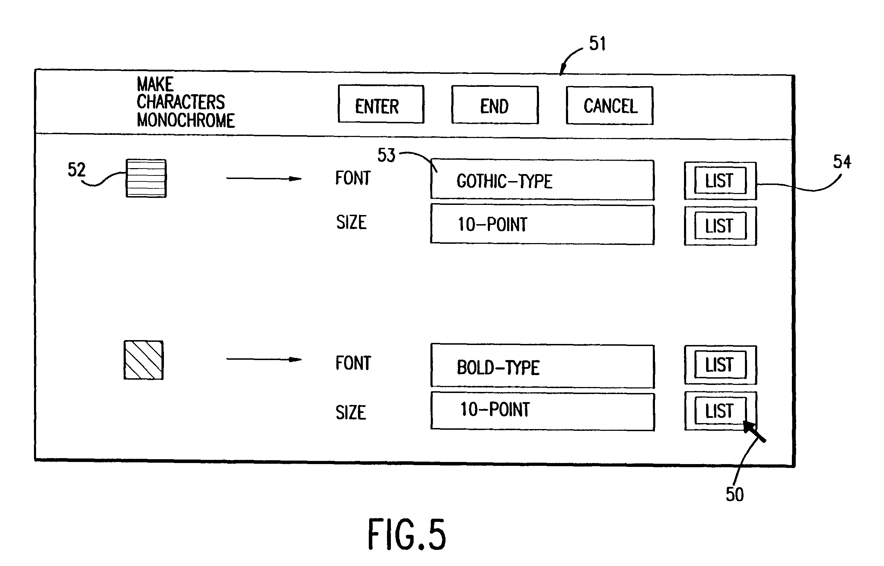

Fig. 5 illustrates a second example for a user interface screen created by the setting processor 17. To set a monochrome, color information 52, other than the default value in the document, is displayed on the left-hand section of a setting window 51 on a user interface screen. User entry fields 53 are displayed on the right of the labels for color information 52. The user specifies a user entry field 53 to alter an attribute of font. Also in this setting window 51, dual-frame fields 54 with labels "list" are keys that can be pointed to by a user to display a menu of shapes that can be selected. When a key is pointed to, a shape list menu is displayed over the setting window 51. This allows a user to select an item of the menu with the pointer cursor 50 by operating a mouse device. The menu of shape list will go off when the user selects an item, or points to a position outside the menu. The item selected by the user is displayed in the user entry field 53 on the left of the key.

Next, adding a font scheme to a color scheme will be explained. This is similar to switching from a color scheme to a font scheme, as explained above. It differs in that a field for specifying whether a color of a key-marker is to be the default value is added by the setting processor 17.

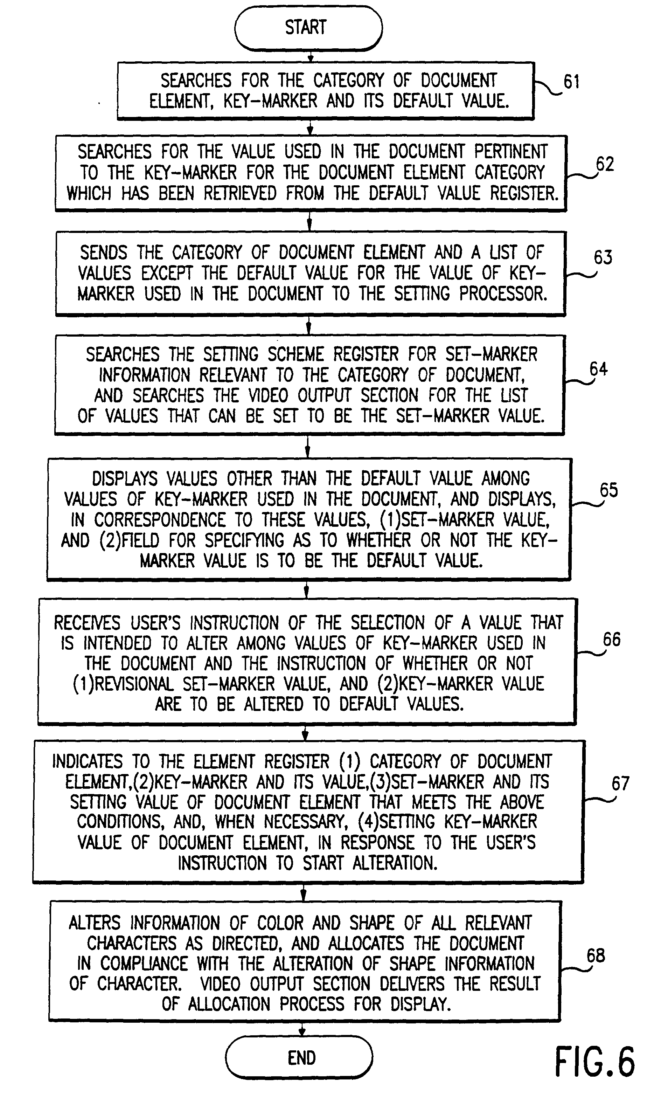

Next, the process to emphasis scheme alteration based on the first embodiment will be explained. Fig. 6 illustrates a flowchart for the overall process to emphasis a scheme alteration. The process starts when a user instructs alteration of an emphasizing scheme by, for example, selecting "emphasis scheme alteration" in a document editor menu during writing. In step 61 of the process, the search processor 15 searches default value register 16 for a document element category, key-marker and its associated default value. In step 62, the search processor 15 searches the element register 12 for a value used in a pertinent document with respect to the key-marker for the document element category, that has been determined from the default value register 16.

Step 63 transfers the document element category and a list of values, except for a default value of a key-marker value used in the document, from the search processor 15 to the setting processor 17. In step 64, the setting processor 17 searches the setting scheme register 18 for set-marker information relevant to the document category, and also searches the video output section 14 for a list of values that can be set as a set-marker value.

In step 65, the setting processor 17 displays values, other than the default value among values for key-marker used in the document. It also displays the set-marker value and a field for letting a user specify whether the key-marker value is to be a default value (see Figs. 4 and 5).

In step 66, a user selects a value intended to alter values for a key-marker in the document. The setting processor 17 receives a user's instruction whether a revisional set-marker value and key-marker value are to be altered or changed to the default values. With a user's instruction to alter the key-marker value to the default value, the setting processor 17 searches the default value register 16 for a key-marker and its associated default value that corresponds to the document element category.

In step 67, when a user instructs the start of alteration, the setting processor 17 indicates (1) the document element category, (2) the key-marker and its value, (3) the set-marker and its setting value for a document element that meets conditions (1) and (2), and, when necessary, (4) the setting key-marker value of a document element that meets the conditions (1) and (2) to the element register 12.

Step 68 then alters the information for color and shape in all relevant characters in the element register 12, as directed by the setting processor 17. Subsequently, the layout processor 13 lays the document out based on shape alteration information for characters in the element register 12. The video output section 14 delivers a layout process result for display.

Next, switching or adding a scheme for emphasis and distinction with two forms of font and color will be explained, using a specific document example.

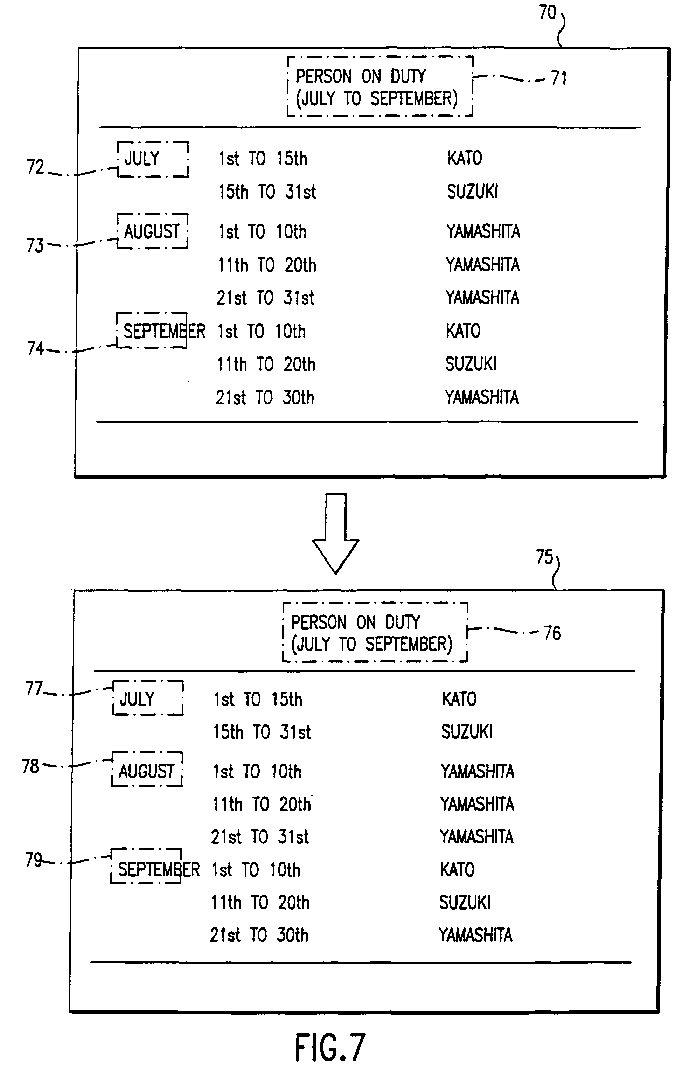

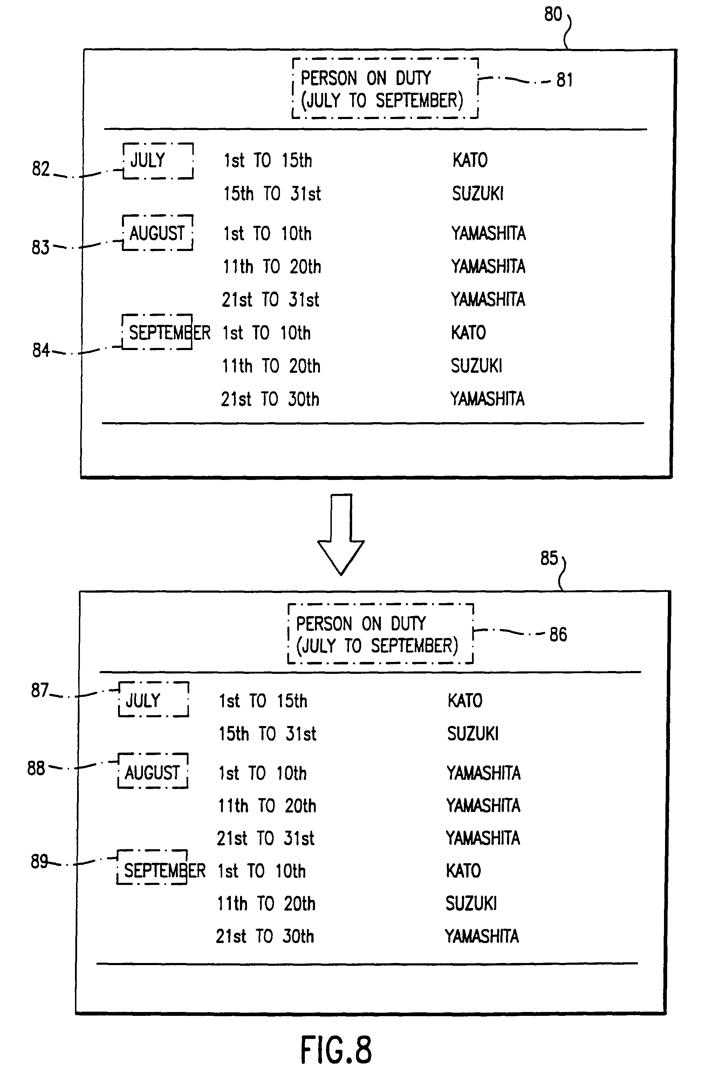

Fig. 7 explains the process for adding a color scheme to a font scheme. It also illustrates a change in document elements. Fig. 8 explains switching a scheme for emphasis and distinction from a color scheme to a font scheme, and also shows the change in document elements.

First, adding a color scheme to a font scheme will be explained. It will be assumed that the key-marker is "font" and its default value is "Mincho-type." For example in Fig. 7, a user is editing a document 70 shown in the upper section that includes letters of Gothic-type 71-74 and letters of Mincho-type. The user sets color values R = 10, G = 10 and B = 50 for Gothic letters based on the setting processor 17, and subsequently instructs information alteration in the document element. The alteration process places a color of R = 10, G = 10 and B = 50 for all Gothic letters 71-74 in the original document 70, and results in colored Gothic letters 76-79 in the revised document 75. (Colored letters are shown by hatching in the figures.)

If the user simultaneously specifies the Mincho-type as a default font for Gothic letters, a color of R = 10, G = 10 and B = 50 is used for Gothic letters 71-74 having a font of Mincho-type, as a result of the alteration. As shown in the upper section of Fig. 8, a color of R = 10, G = 10 and B = 50 is placed in Gothic letters 81-84 in the original document 80. The Mincho-type of default value is restored for the letters, as shown in the lower section of Fig. 8. Consequently, the scheme for emphasis and distinction is switched from a font scheme to a color scheme. (Colored letters are also shown by hatching in the figures.)

Next, switching a scheme for emphasis and distinction from a color scheme to a font scheme will be explained. Here, the key-marker is "color" and its default value is R = 0, G = 0 and B = 0.

The user is editing a document 80 with Mincho-type letters, and includes letters 81-84 having a color, other than the default color, as in the upper section of Fig. 8. The user instructs conversion of these colored letters 81-84 to a Gothic-type font. The letters then become Gothic-type letters 86-89 in the revised document, as shown in the lower section of Fig. 8. Consequently, all letters having a color, other than the default color, become Gothic-type and have the default color.

According to the document processing system of the first embodiment, where font and color of letters are used to switch or combine schemes for emphasis and distinction, it is possible to (1) clarify emphasis and distinction of letters having a font different from a default font by using a multicolor expression on a color output device, (2) clarify emphasis and distinction of letters having a color different from a default color by changing the font on a color output device, and (3) clarify emphasis and distinction of letters having a color different from a default color by changing a font and changing a color to the default color on a monochrome output device.

Next, various alternative embodiments for system components in the document processing system of the first embodiment will be explained.

### (1) Format of document elements stored by the element register 12.

In the first embodiment, the element register 12 stores document elements by expressing characters of document elements in terms at least one of character code, shape and color as sets of attribute and value. The element register 12 also arranges the sets in order of appearance in the document to form an information string.

Alternatively, a table of attributes in a document may be placed at a top of a document, with a temporary identifier given to each attribute value. Thus, the identifier is used for an attribute value in the document. For example, when a document uses a color R = 0, G = 0 and B = 50 and another color R = 70, G = 70 and B = 70, these colors are given identifiers "color1" and "color2". A document element in the document is expressed as: {(category character), (code 1111), (font Mincho), (size 10-point), (color color1)}.

### (2) Format of document element color information stored by the element register 12 and default value register 16.

In the first embodiment, RGB values are stored as color information for document elements. As an alternative, other formats that meet the printing form of the video output section 14, e.g., YMCK values, may be used. This can readily be practiced by a color code converting processor.

### (3) Format of character shape information stored by the element register 12.

The register of the first embodiment stores font and size as information for character shape. In addition, information for character ornamentation (e.g., underlining) and character-background ornamentation (e.g., color inversion between foreground and background) may also be stored, so a scheme for emphasis and distinction can be further clarified.

### (4) Key-marker used to specify characters to be emphasized.

Alternatively, rather than using a character font as a key-marker, character size (point number), character ornamentation (underline, Bold-type letters, etc.) or character-background ornamentation (inversion of foreground and background) may be used. Furthermore, multiple sets of key-markers and their default values may be used.

### (5) Default values specified by the user with the setting processor 17.

The setting processor 17 may store a table of default values of original key-marker values, revisional set-marker values and key-marker values. It may also display it so a user can specify portions to be altered. This reduces the user's task, and enables an efficient setting process.

### (6) Color designation for the setting processor 17.

Rather than using color patches to specify a color for the setting processor 17 in the document processing system of the first embodiment, color may be numerically specified in terms of a YMCK value, RGB value and the like.

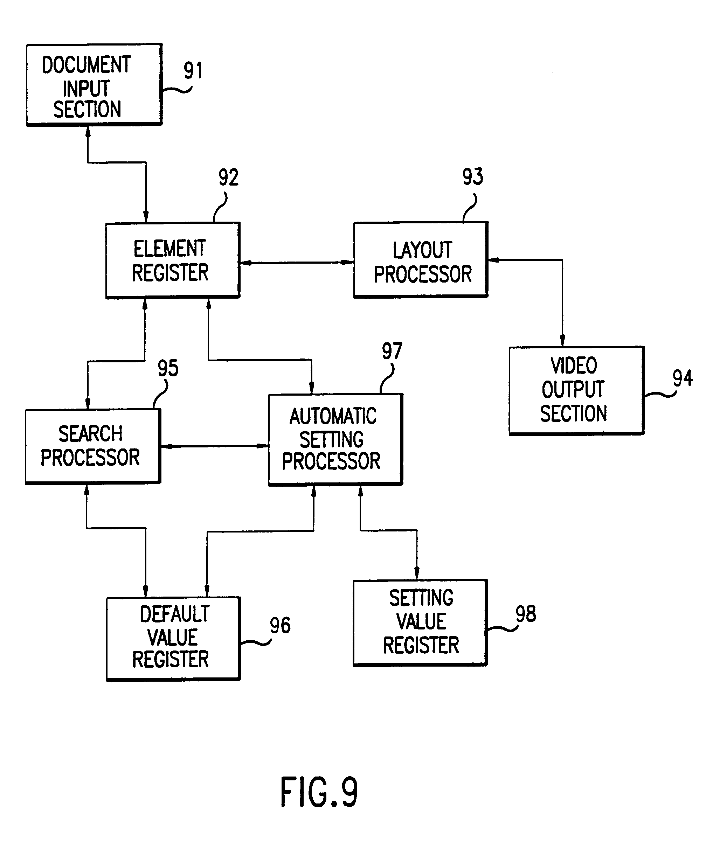

It is possible to automate a user's routine action to provide correspondence between an original key-marker value, revisional set-marker value and key-marker value conducted with the setting processor 17. The document processing system of the second embodiment is intended for this type of implementation. Fig. 9 shows by a block diagram for a configuration of major system components of the document processing system for the second embodiment.

The system includes a document input section 91, a element register 92, a layout processor 93, a video output section 94, a search processor 95, a default value register 96, an automatic setting processor 97, and a setting value register 98.

The document input section 91, element register 92, layout processor 93, video output section 94, search processor 95 and default value register 96 of the document processing system shown in Fig. 9 are similar in structure and operation to the document input section 11, element register 12, layout processor 13, video output section 14, search processor 15 and default value register 16 of the document processing system according to the first embodiment.

The setting processor 17 and setting scheme register 18 of the first embodiment are replaced by the automatic setting processor 97 and setting value register 98 in the second embodiment. The setting value register 98 stores an automatic setting table, that contains sets of categories of document elements, original key-marker information, and revisional set-marker information.

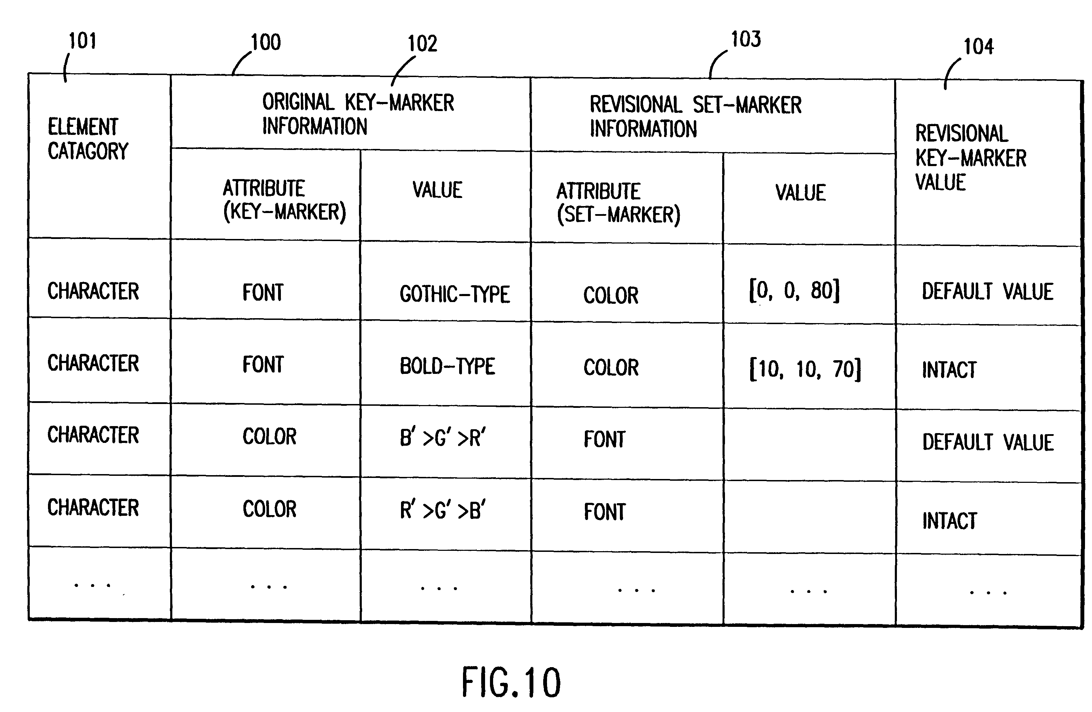

Fig. 10 illustrates an automatic setting table 100. The automatic setting table 100 stores corresponding categories for document elements, original key-marker information, revisional set-marker information and revisional key-marker values. Namely, to store this information, the automatic setting table 100 has a document element category field 101, an original key-marker information field 102, a revisional set-marker information field 103 and a revisional key-marker value field 104.

The element category field 101 contains a category of document element, e.g., character. The original key-marker information field 102 contains an original key-marker or attribute and its value. The revisional set-marker information field 103 contains a revisional set-marker or attribute and its value. The revisional key-marker value field 104 contains a value, i.e., "default value" or "intact", as revisional key-marker information indicative as to whether the key-marker value is a default value after alternation.

For example, to change color of Gothic letters in a document, a user enters "character" as a category of document element in the document element category field 101; enters "font" and "Gothic-type" for a key-marker and its value in the original key-marker information field 102; enters "color" and "0, 0, 80" indicative of blue in RGB code for a set-marker and its value in the revisional set-marker information field 103; and enters "default value" indicative of a key-marker value designation after alteration to a default value in the revisional key-marker value field 104.

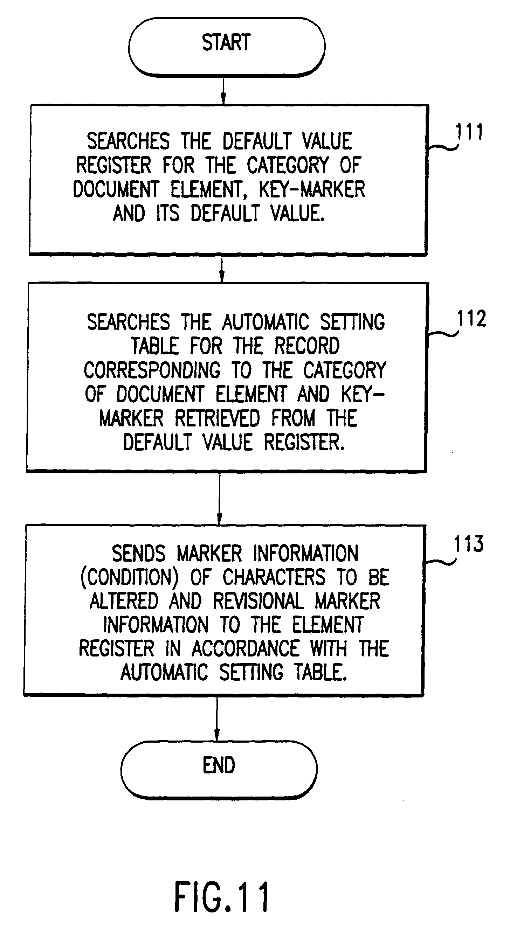

Fig. 11 illustrates a flowchart for the automatic setting processor 97, which uses the automatic setting table. Step 111 searches the default value register 96 for a document element category, key-marker and its default value in response to a user's instruction. Step 112 accesses the automatic setting table 100 in the setting value register 98 to search for a corresponding category for a document element and key-marker retrieved from the default value register 96. Step 113 sends marker information or a character's condition to be altered and revisional marker information to the element register based on the automatic setting table.

Specifically, the scheme for emphasis and distinction is altered by issuing a command to alter a set-marker value to a value indicated by the automatic setting table for document elements having a certain key-marker value. This command is not issued if the key-marker value is a default value. When the automatic setting table has a setting to make the key-marker value the default value, a command to make it the default value is issued in addition to alteration of the set-marker value.

Next, a specific example of information stored by each system component of the document processing system of this embodiment for adding or switching the scheme for emphasis and distinction of two markers , "font" and "color" for characters of document elements, is explained.
(1) In switching from a font scheme to a color scheme, the default value register 96 stores information "character" as a category of document element. It also stores information "font" as a key-marker. It can store information "Mincho-type," for example, as a default value. In the setting value register 98, entries, such as a row, having "character" in the document element category field 101, "font" in the original key-marker information field 102, and "default value" in the revisional key-marker value field 104, are created in the automatic setting table 100.
(2) In switching from a color scheme to a font scheme, the default value register 96 stores information "character" as a category of document element and information "color" as a key-marker. It also can store a set of values R = 0, G = 0 and B = 0, as a default value. In the setting value register 98, entries such as a row having "character" in the document element category field 101, "color" in the original key-marker information field 102, and "default value" in the revisional key-marker value field 104, are created in the automatic setting table 100.
(3) To add a color scheme to a font scheme, the default value register 96 stores information "character" as a category of document element and information "font" as a key-marker. It can also store "Mincho-type," as a default value. In the setting value register 98, entries such as a row, having "character" in the document element category field 101, "font" in the original key-marker information field 102, and "intact" in the revisional key-marker value field 104, are created in the automatic setting table 100.
(4) In adding a font scheme to a color scheme, the default value register 96 stores information "character" as a category of document element and also stores information "color" as a key-marker. It can store values R = 0, G = 0 and B = 0, as a default value. In the setting value register 98, entries such as a row, having "character" in the document element category field 101, "color" in the original key-marker information field 102, and "intact" in the revisional key-marker value field 104, are created in the automatic setting table 100.

Initial data can be set in system components, dependent on an emphasizing scheme intended by a user, as explained above. The process for emphasis scheme alteration can then be carried out.

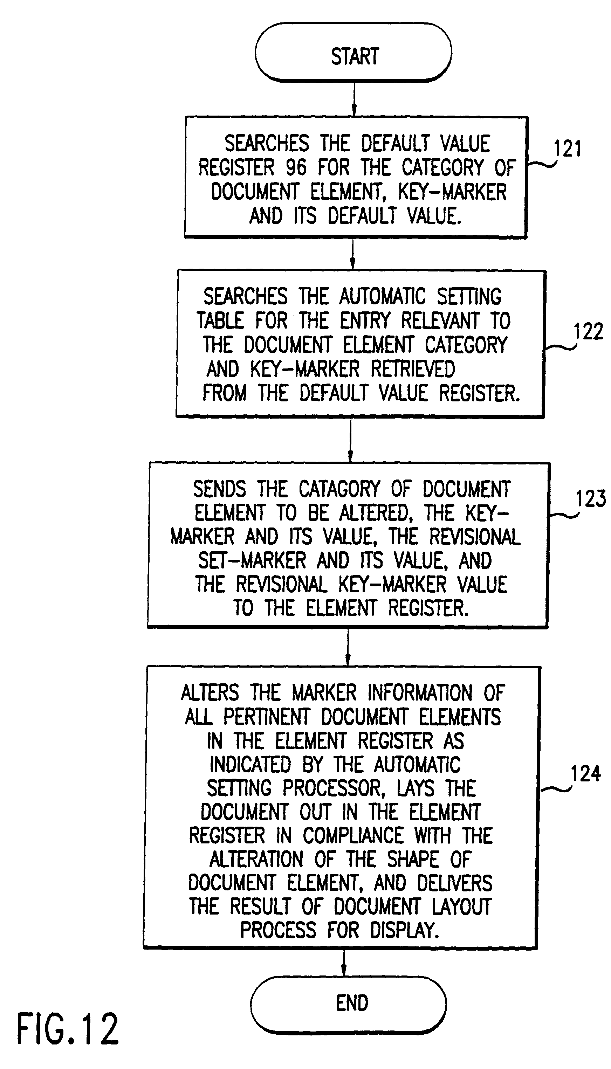

Fig. 12 is an illustration for a process of emphasis scheme alteration implemented by the document processing system of the second embodiment. The program for emphasis scheme altering process starts when a user instructs alteration of an emphasizing scheme, for example by selecting the "emphasizing scheme alteration" in a menu of document editor, during document writing.

In step 121, the automatic setting processor 97 searches default value register 96 for a category of document element, key-marker and its default value. In step 122, the automatic setting processor 97 searches an automatic setting table stored in the setting value register 98 for an entry relevant to a document element category, and a key-marker retrieved from the default value register 96. Next in step 123, the automatic setting processor 97 sends a category of a document element to be altered, the key-marker and its value, the revisional set-marker and its value, and, when necessary, the revisional key-marker value to the element register 92.

In step 124, marker information is altered by all pertinent document elements in the element register 92, as indicated by the automatic setting processor 97. The layout processor 93 lays out a document in the element register 92, in compliance with the shape alteration of the document element. The video output section 94 then delivers a result of the document layout process for display.

Next, a specific example for emphasis scheme altering process will be explained. The initial data is assumed to be stored by the default value register 96 as values of "character" for the category of document element, "font" for the key-marker and "Mincho-type" for the default value of key-marker. The document, which is being edited, includes Gothic-type and Bold-type letters, in addition to Mincho-type letters.

The automatic setting processor 97 can store a record in the automatic setting table 100, as shown in Fig. 10. By the process for emphasis scheme alteration based on data, for entries of row 1 of the automatic setting table 100 a color of R = 0, G = 0 and B = 80 is set for all Gothic-type letters in the document and Mincho-type is set as the default value for a font of these letters. By the process based on data for entries of row 2 of the automatic setting table 100, a color of R = 10, G = 10 and B = 70 is set for all Bold-type letters in the document. However, the font for the key-marker is left unchanged.

Although the setting value register 98 stores color information in terms of RGB code ranging from 0 to 100, in the document processing system of the second embodiment, other forms of information, such as the YMCK code, may be used. Original key-marker information stored by the setting value register 98 may be multiple sets of key-markers and their values.

In contrast to the first embodiment, where a user can specify a set-marker value inclusive of a default value, it is possible to confine a range of a user's set-marker value selection to only values other than the default value. Thus, a user's erroneous selection of a default value can be prevented. A document processing system according to a third embodiment is intended for this use.

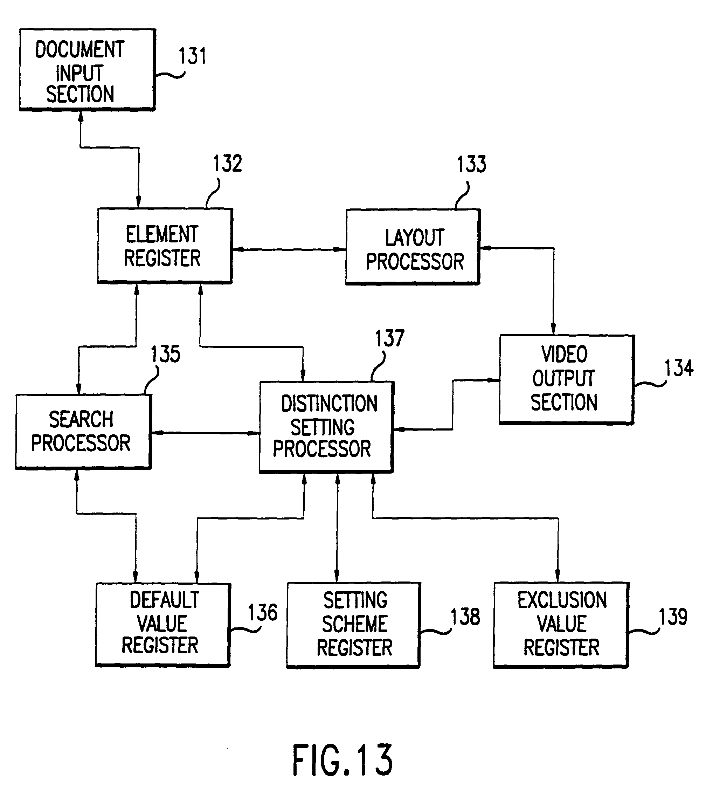

Fig. 13 illustrates a configuration of major system components for the document processing system, according to the third embodiment of invention. The system includes a document input section 131, an element register 132, a layout processor 133, a video output section 134, a search processor 135, a default value register 136, a distinction setting processor 137, a setting scheme register 138, and an exclusion value register 139.

The document input section 131, element register 132, layout processor 133, video output section 134, search processor 135, default value register 136 and setting scheme register 138 of the document processing system correspond and are similar to the document input section 11, element register 12, layout processor 13, video output section 14, search processor 15, default value register 16 and setting scheme register 18 of the document processing system of the first embodiment of Fig. 1.

The document processing system of the third embodiment is generally similar in structure and operation to the document processing system of the first embodiment, except that the setting processor 17 of the first embodiment is replaced with the distinction setting processor 137 and associated exclusion value register 139. The distinction setting processor 137 is generally similar in function to the setting processor 17 of the first embodiment.

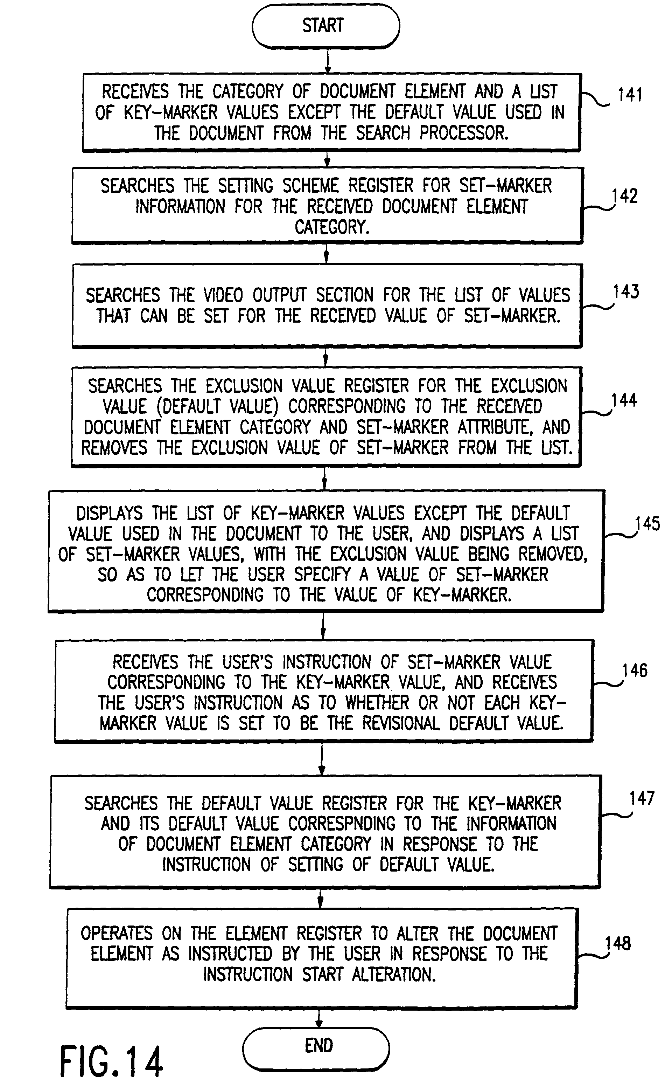

Fig. 14 illustrates a flowchart of a process in the distinction setting processor 137. In step 141, a category of document element and a list of key-marker values, except the default value used in the document, are received from the search processor 135. Step 142 searches the setting scheme register 138 for set-marker information of the document element category received in step 141.

In step 143, the video output section 134 searches for a list of values that can be set for the set-marker value that was received in step 142. Step 144 searches the exclusion value register 139 for an exclusion or default value corresponding to the document element category and set-marker attribute that was received in step 142. It then removes the exclusion value for set-marker from the list.

Step 145 displays a list received in step 141 for the user. It includes set-marker values, with the exclusion value removed by step 144. A user can then specify a set-marker value corresponding to the value of key-marker. Step 146 receives a user's instruction for a set-marker value corresponding to the key-marker value. It also receives a user's instruction as to whether each key-marker value is set to a revisional default value.

In response to a user's instruction for setting a key-marker value to a default value, step 147 searches the default value register 136 for a key-marker and its default value that corresponds to information of document element category that was received in step 141. In response to the user's instruction to start alteration, step 148 operates on the element register 132 to alter the document element, as instructed by the user in step 146.

Step 148 indicates the alteration of a set-marker value to a value instructed by the user for characters having a relevant value to a key-marker. If a user has instructed the key-marker value to be a default value, it indicates designation of the key-marker value as the default value, in addition to alteration of the set-marker value.

User interface screens, used in the distinction setting processor 137 of this embodiment, are generally similar to those shown in Figs. 4 and 5, except that color patch and character shape lists do not include default values. When numerically entering color information in terms of a YMCK code or RGB code, the default value is absent and cannot be selected. The exclusion value register 139 can store sets of attribute values that may be default values in the document.

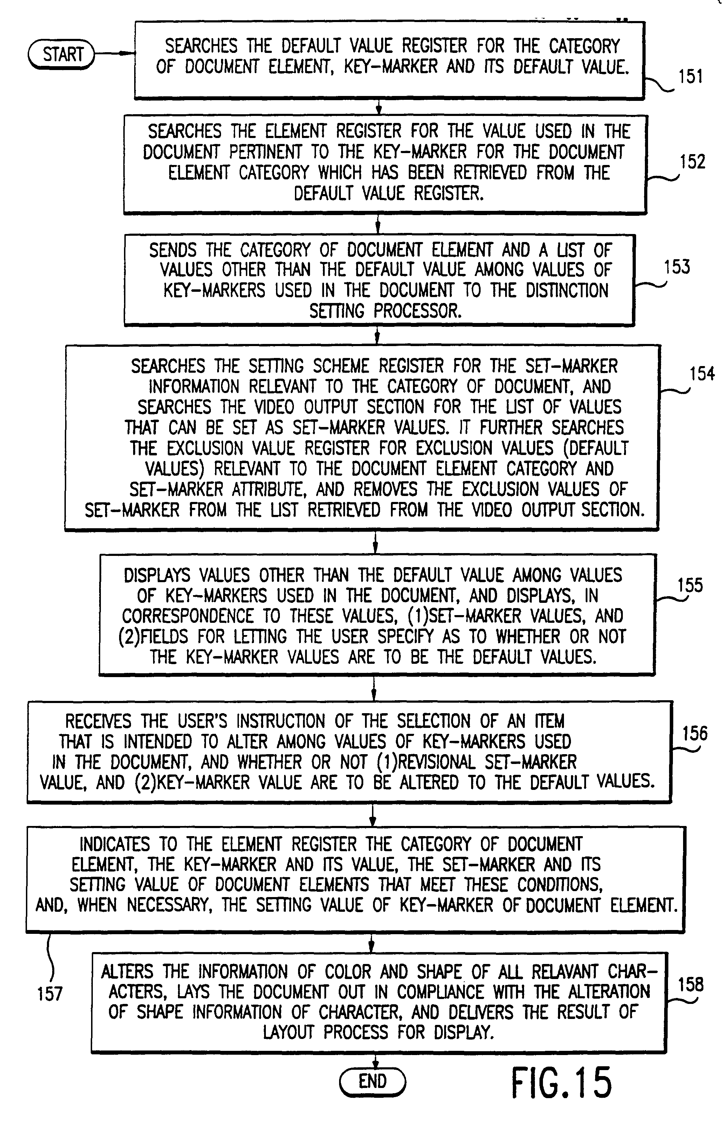

Next, a process for emphasis scheme alteration, based on the third embodiment, will be explained. Fig. 15 shows a flowchart for the overall process of emphasis scheme alteration. The process starts when a user instructs alteration of an emphasizing scheme by, for example, selecting "emphasis scheme alteration" in a menu of document editor during document writing. In step 151, the search processor 135 searches the default value register 136 for a document element category, key-marker and its default value. In step 152, the search processor 135 searches the element register 132 for a value used in the document that is pertinent to the key-marker of the document element category, that was retrieved from the default value register 136.

Step 153 transfers, from the search processor 135 to the distinction setting processor 137, the category of document element and a list of values, other than the default value used in the document. In step 154, the distinction setting processor 137 searches the setting scheme register 138 for set-marker information that is relevant to the category of document. It also searches the video output section 134 for a list of values that can be set-marker values. It further searches the exclusion value register 139 for exclusion values or default values that are relevant to the document element category and set-marker attribute. It removes the exclusion values of set-marker from the list retrieved from the video output section 134.

In step 155, the distinction setting processor 137 displays values, other than the default value among values of key-markers used in the document. It further displays, the set-marker values and fields permitting a user to specify as to whether key-marker values are to be corresponding default values (see Fig. 4 and Fig. 5). In step 156, the user selects a value intended to alter values of key-markers used in the document. Further, a user then instructs whether the revisional set-marker value, and the key-marker value are to be altered to default values. Where a user instructs altering a key-marker value to a default value, the distinction setting processor 137 searches the default value register 136 for a key-marker and its default value that correspond to the category of document element.

In step 157, when the user instructs the start of alteration, the distinction setting processor 137 indicates the category of document element, the key-marker and its value, the set-marker and its setting value of document elements that meet the above conditions (1) and (2), and, when necessary, (4) the setting key-marker value of document elements that meets conditions (1) and (2) to the element register 132.

Step 158 alters color and shape information for all relevant characters in the element register 132, as directed by the distinction setting processor 137. Subsequently, the layout processor 133 lays out the document out in compliance with alteration shape information of characters in the element register 132. The video output section 134 then delivers a result of layout process for display.

The alteration of a scheme for emphasis and distinction of document elements in a document, based on the visual feature of characters according to the first, second and third embodiments can be extended to alteration of a scheme for emphasis and distinction for document elements in a document based on visual characteristics or feature(s) of lines, figures and tables. This is now discussed with respect to the fourth embodiment.

The document processing system of the fourth embodiment is modified to process different data forms. The following is an explanation of the functions, which process visual features of lines, added to the element register 12 (92, 132) and layout processor 13 (93, 133) of the first (second and third) embodiment.

The element register 12 (92, 132) expresses a line in terms of a set of attributes and their values, as follows:
{(category line), (thickness 1), (dashed-line solid-line), (right-end corner), (left-end corner), (color R = 0, G = 0, B = 50)}.

The layout processor 13 (93, 133) determines the position of an area as in a layout of a character string, which forms a line, based on first-third information.
First information: Pertains to a feature or shape, such as thickness, of a line to be displayed. It is stored in the element register 12 (92, 132).
Second information: Pertains to a feature or shape, such as size, of the line to be displayed. It is stored in the video output section 14 (94, 134).
Third information: Pertains to a restriction of line layout on a page, in connection with a margin and the like. It is stored by the element register 12 (92, 132).

When line shape information stored in the element register 12 (92, 132) is altered, it is necessary to re-execute a document layout process on the layout processor 13 (93, 133).

Next, the operation of the document processing system according to the fourth embodiment will be explained, using an example where a scheme for emphasis and distinction of document elements in a document based on visual feature(s), i.e., lines, figures and tables, is switched from a line-thickness scheme to a color scheme. The correspondence between original markers and revisional markers is assumed to have been instructed in advance by a user, as in the first embodiment.

The default value register 16 (96, 136) can store information "line" as a document element category, can store information "thickness" as a key-marker, and can store a default value "1" for a key-marker. The setting scheme register 18 (138) can store information "line" as a category of document element, and can store information "color" as a set-marker. The operation placing "color" to lines, other than those with the default set-marker, is carried out. The user specifies a color as follows.

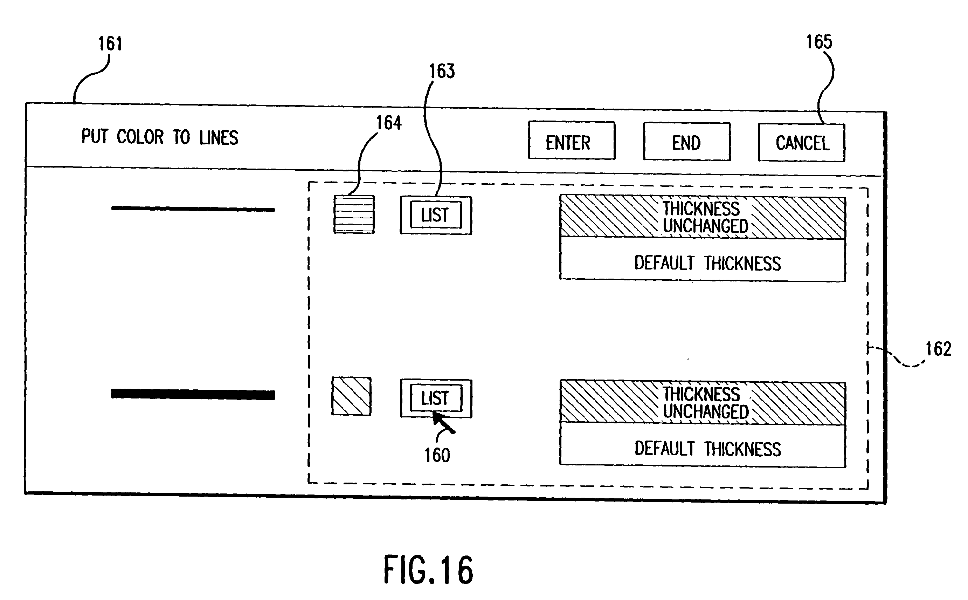

Fig. 16 is an example of a user interface screen created by the setting processor 17. The user interface screen has a similar function as that shown in Fig. 4, however the user is prompted to specify a thickness of line, instead of a character font. To set line color, values other than the default value among values of key-markers included in the document, are displayed on a user interface screen on the left-hand section of a setting window 161. A user entry field 162, is displayed on the right of the key-marker value, where a user specifies color information for a line with a key-marker, other than the default value. The user also specifies whether the key-marker is to be the default value. Namely, this specifies whether the color designation operation for a line with a default value is to occur. The system is initialized to have "no-color" or blank for the color information field or color patch, and a non-default value for the key-marker.

A user specifies color information by selecting a color patch 164. In Fig. 16, a dual-frame field 163, which includes a labels "list" is a color patch key, is pointed to by the user to display a list of color patches. The list of color patches is displayed over the setting window 161 by the setting processor 17. When the user operates a mouse device to select with a pointer cursor 160 one of color patches in the list or points to a position outside the color patch, the color patch list goes off. The color selected by the user is displayed in a rectangular color patch field 164 at the left of the color patch key field 163.

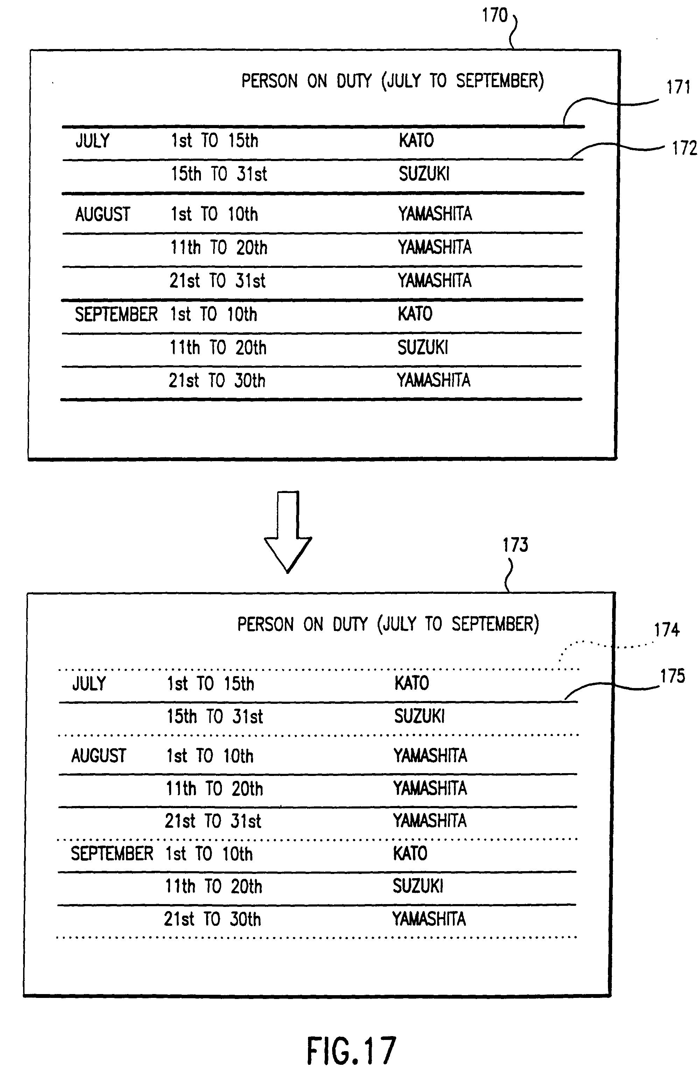

Fig. 17 illustrates switching of a scheme for emphasis and distinction of lines of figures and tables from a thickness scheme to a color scheme. The switching process will be explained based on an assumption that a document element category is "line," key-marker is "thickness," and default key-marker value is "1." A user edits a document 170 as shown in the upper section of Fig. 17. The document 170 includes lines of two kinds of thickness, i.e., lines 171 with thickness "1" and lines 172 with thickness "2," and all lines being black (R = 0, G = 0, B = 0).

When a user operates a user interface screen, as shown in Fig. 17, with the setting processor 17 setting a color of R = 10, G = 10 and B = 70 for the lines 171 of thickness "2," and subsequently instructs alteration of document element information, then a color of R = 10, G = 10 and B = 70 is placed on lines 171 of thickness "2". This results in lines 174 having a color of R = 10, G = 10 and B = 70, and a thickness of default value "1" in the revised document 173, as shown in the lower section of Fig. 17, colored lines are shown as dashed lines. Consequently, the scheme for emphasis and distinction of lines is switched from a thickness scheme to a color scheme for the thicker lines 171. Other lines 172 in the document 170 having a thickness of default value "1" are unchanged in color and thickness, as shown by 175 in the altered document. Further, the characters are not altered for color and shape.

Although the fourth embodiment has been explained with switching a scheme for emphasis and distinction for lines, figures and tables from a line-thickness scheme to a color scheme, it is also possible to switch to other scheme(s) and/or to combine schemes for emphasis and distinction. For example, it is possible to add a color scheme to a line-thickness scheme, or switch a color scheme to a line-thickness scheme. It is also possible to correspond original marker information and revisional marker information, so a scheme for emphasis and distinction is altered without a user's instruction(s), as in the second embodiment.

Switching of a scheme for emphasis and distinction of lines, as in the fourth embodiment, can be applied to a digital color copy machine, which interprets images in terms of pixel data. A digital color copy machine, with a function that puts multiple colors to lines with thicknesses that are different from a default value added to provide a more clearer emphasis and distinction, will be explained according to a fifth embodiment. Although the copy machine according to the fifth embodiment process to images and processes pixel data, the terms "key-marker" and "set-marker" used herein are substantially the same as in the first through fourth embodiments. Specifically, key-marker is a thickness of a line, and the set-marker is a color of a line.

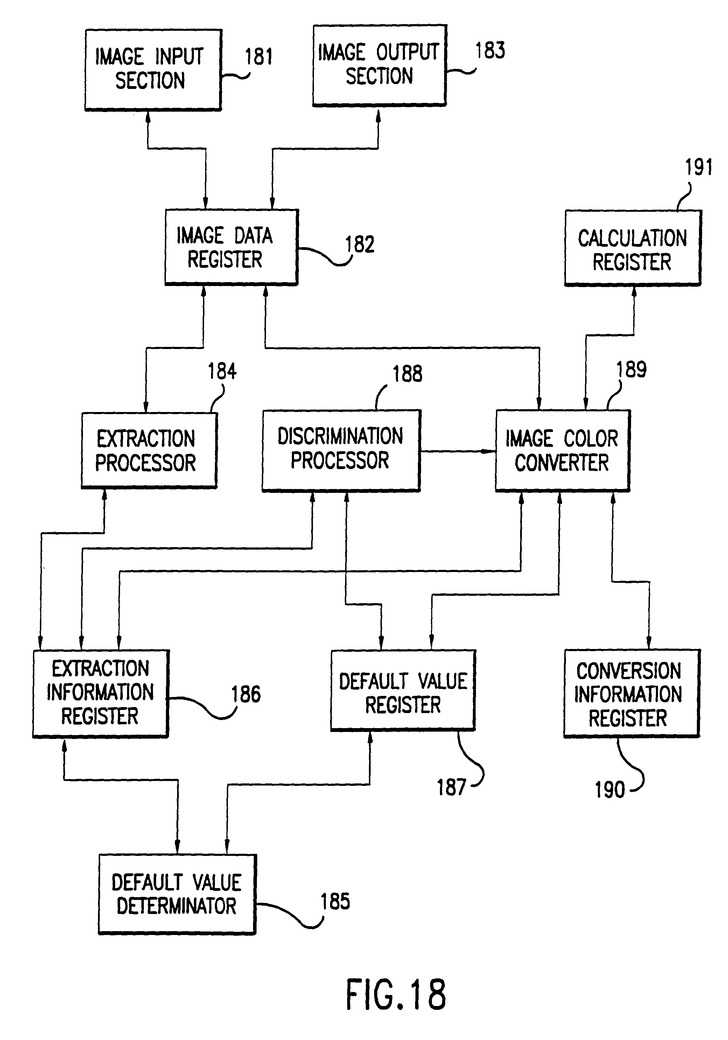

Fig. 18 illustrates a schematic block diagram for major system components in the document processing system or digital color copy machine according to the fifth embodiment. The system includes an image input section 181, an image data register 182, an image output section 183, an extraction processor 184, a default value determinator 185, an extraction information register 186, a default value register 187, a discrimination processor 188, an image color converter 189, a conversion information register 190, and a calculation register 191.

Among these system components, the image input section 181, image data register 182 and image output section 183 are substantially similar to those of conventional digital copy machines. Thus, an explanation is omitted.

The image input section 181 reads an image of a source document, and produces digital image data. Specifically, it can optically scan a monochrome document to produce image data, separate color data of red (R), green (G) and blue (B), and produce digital color image data of 256 gray levels (8 bits for each color). The image data register 182 stores the digital color image data.

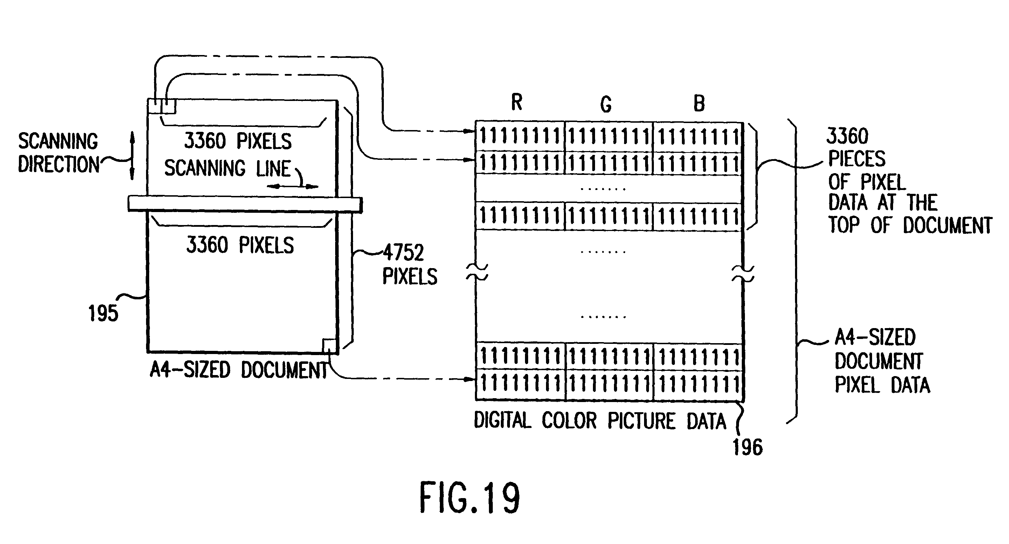

Fig. 19 explains a relation between a source document reading and pixel data in the image input section 181. The digital color image data 196 produced by the image input section 181 consists of pixels, each having an area of 0.0625-by-0.0625 mm or 16-by-16 pixels in 1 mm, or a resolution of about 400 dpi on a 200 source document. A pixel is represented by 24 bits or contiguous 3-byte data with the first 8 bits being assigned to 256-tone data for red, the next 8 bits being assigned to 256-tone data for green and the last 8 bits being assigned to 256-tone data for blue. All "1" bit data signifies white, and all "0" bit data signifies black.

A scanning operation produces digital color image data for one A4-sized document page. The image data consists of contiguous 3360-by-4752 pixel data, 3360 pixels in the horizontal main scanning direction and 4752 pixels in the vertical subordinate scanning direction. Scanning of pixel data starts at a top-left corner of the source document, and complies with optical scanning in which the CCD-based scanning line is moved in a long-side direction along a short-side direction of the document. With an A4-sized document placed vertically, the first through 3360th pixel data are aligning from left to right at the top of the document, and 4752 sets of 3360 pieces of pixel data are produced from top to bottom on the document.

The image data register 182 stores entered digital color image data for this data structure, based on the address order of scanning line data. The image output section 183 operates with a printing mechanism, which is based according to digital color xerography to implement a laser beam exposure and development. Thus, it produces a printed color image on a sheet of paper from the digital color image data stored in the image data register 182. Prior to a printing operation, the image output section 183 converts image data of an RGB code into data of yellow (Y), magenta (M), cyanine (C) and black (K), i.e. toner colors used for color printing. The digital color copy machine can have separate developing cycles for each of these toner colors.

Next, the operation of the extraction processor 184, default value determinator 185, default value register 187, image color converter 189, conversion information register 190 and calculation register 191 will be explained.

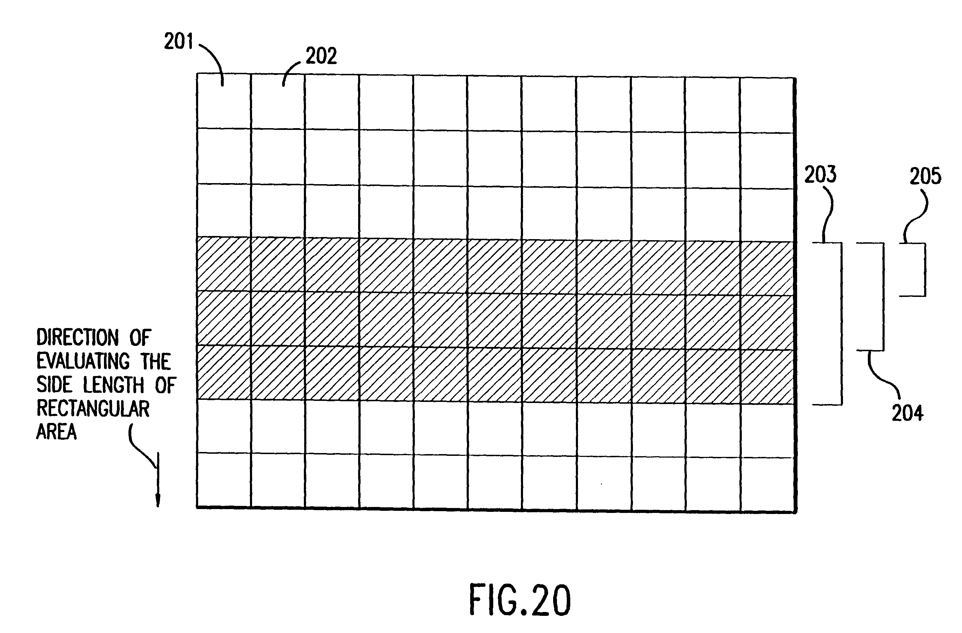

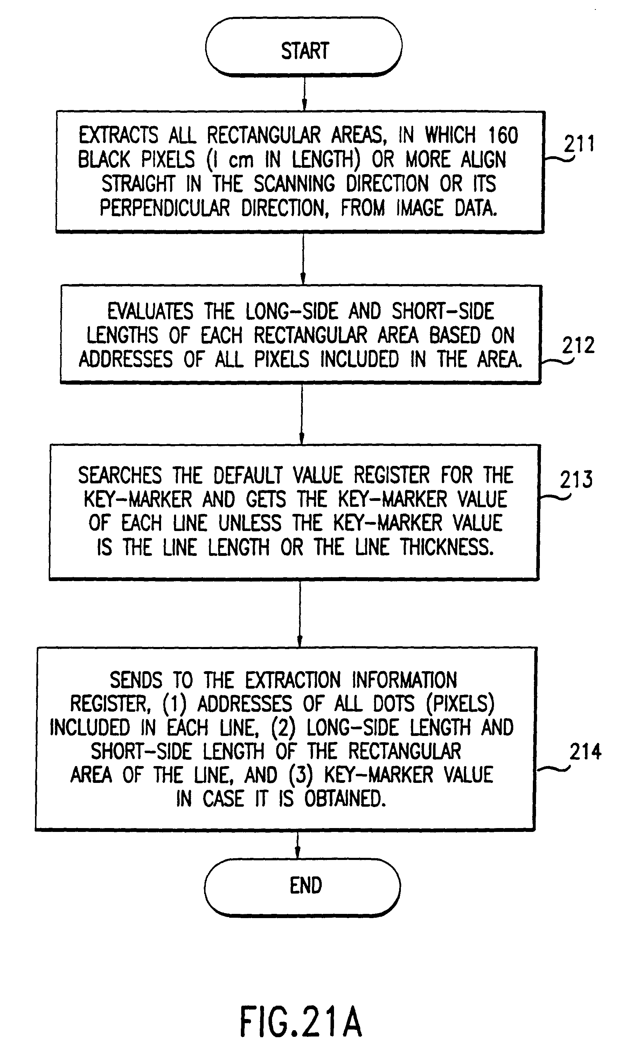

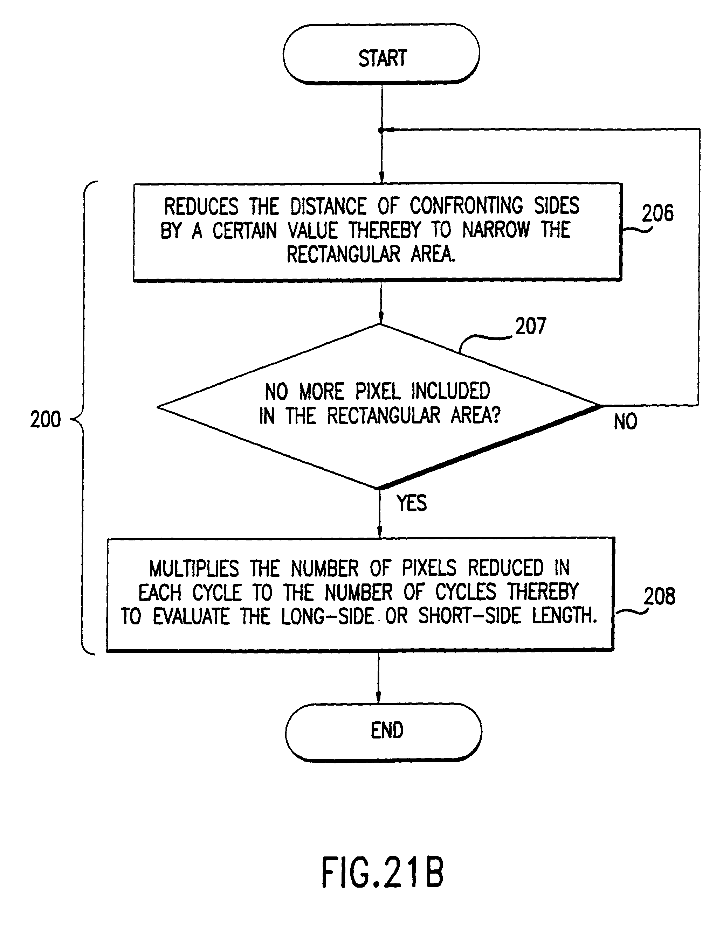

Fig. 20 and Figs. 21A and 21B explain the process of the extraction processor 184. Fig. 20 explains discriminating a line thickness. Figs. 21A and 21B illustrate a flowchart for the extraction processor 184.

The process of Fig. 21A identifies a rectangular area to be a line, in which black pixels of a certain number, for example, 160 pixels i.e., 1 cm in length or more are aligned straight. Further, the process extracts a position and shape of a line from the document image stored in the image data register 182. The process includes evaluating lengths of a long side and short side of the rectangular area, as shown in Fig. 21B.

In Fig. 20, the position of each pixel is detected in the document image data pixels 201, 202 etc., to determine a rectangular area and evaluate its lengths. Between steps 213 and step 214, the 200 routine or process steps 206-208 of Fig. 21B, is executed to progressively narrow the rectangular area. Finally, the lengths of the long and short side of the rectangular area are evaluated. Specifically, the first narrowing process for a black pixel band 203 can yield a pixel band 204, the second narrowing process for the black pixel band 204 can yield a pixel band 205, and the third narrowing process for the pixel band 205 can eliminate the pixel band. Accordingly, the side length of this rectangular area is determined to be 3 pixels.

The process of the extraction processor 184 will be now explained, with respect to the flowchart Fig. 21A. Step 211 extracts all rectangular areas, where 160 black pixels, 1 cm in length or more, align in the scanning direction or perpendicular to this direction, from document image data stored in the image data register 182. If there is more than one rectangular contiguous area existing in parallel, all of these areas are determined to be a single rectangular area.

Step 212 evaluates lengths of a long side and short side for each rectangular area, based on the pixel address. Step 213 searches the default value register 187 for a key-marker, and determines the value of key-marker of each line, unless a key-marker is a line length or line thickness. Step 214 then sends (1) addresses of all dots (pixels) included in each line, (2) long-side length and short-side lengths of the rectangular area for the line, and (3) key-marker value(s) obtained in step 213 to the extraction information register 186.

The long-side and short-side length of a rectangular area are evaluated in steps 206-208 of the routine 200, as in Fig. 20 and Fig. 21B. The long side and short side of a rectangular area are considered as the length and thickness of a line, respectively. In routine 200, the first step 206 reduces the distance of confronting sides by a number of pixels to narrow the rectangular area. Step 207 determines whether there are more pixels in the rectangular area. Steps 206 and 207 are repeated until there is no pixel remaining in the area. Then, step 208 multiplies the number of pixels reduced in each cycle by the number of cycles, to evaluate a side length based on the number of pixels. Eventually, a long-side and short-side length of the rectangular area are obtained.

In this example, the key-marker for lines in the document image is line thickness, which is considered to be the short-side length of rectangular area. Therefore, the evaluation of key-marker value is not necessary, and is not conducted.

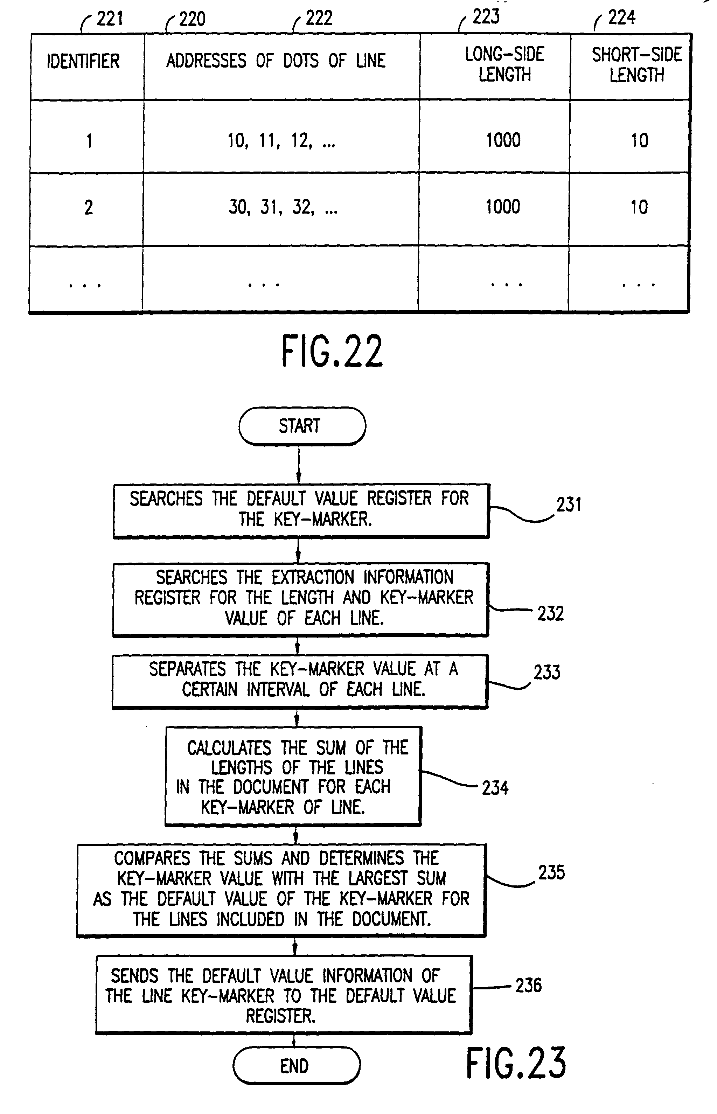

The line information obtained by the extraction processor 184 is stored in the extraction information register 186. Fig. 22 illustrates a data structure for a data table 220 stored by the extraction information register 186. The data table 220 includes an identifier field 221, which contains the identifier for each line; an address field 222, which contains addresses of dots for a line; a long-side field 223, which contains a long-side length for the rectangular area of the line; and a short-side field 224, which contains a short-side length for the line area. The data table 220 may further include a key-marker field, when a key-marker value is used.

Next, the default value determinator 185 process will be explained. Fig. 23 illustrates a flowchart for the default value determinator 185 process according to the fifth embodiment. The digital color copy machine, which deals with a document image, does not include a default value associated with the document processing. Therefore, it determines a default value by using image data read from a document.

Step 231 searches the default value register 187 for a key-marker. Step 232 searches the extraction information register 186 for lengths and a key-marker value of each line that was extracted from the document image data. Step 233 separates the key-marker value at a certain interval from each line to minimize influence of document reading error(s). Step 234 calculates a line length sum in the document for each key-marker. Step 235 then compares the sums, and determines the key-marker value with the largest sum to be the default value of key-marker for lines in the document. Step 236 sends the determined default value of key-marker to the default value register 187, which stores the received default value, e.g., "10 pixels," for the key-marker "thickness of line."

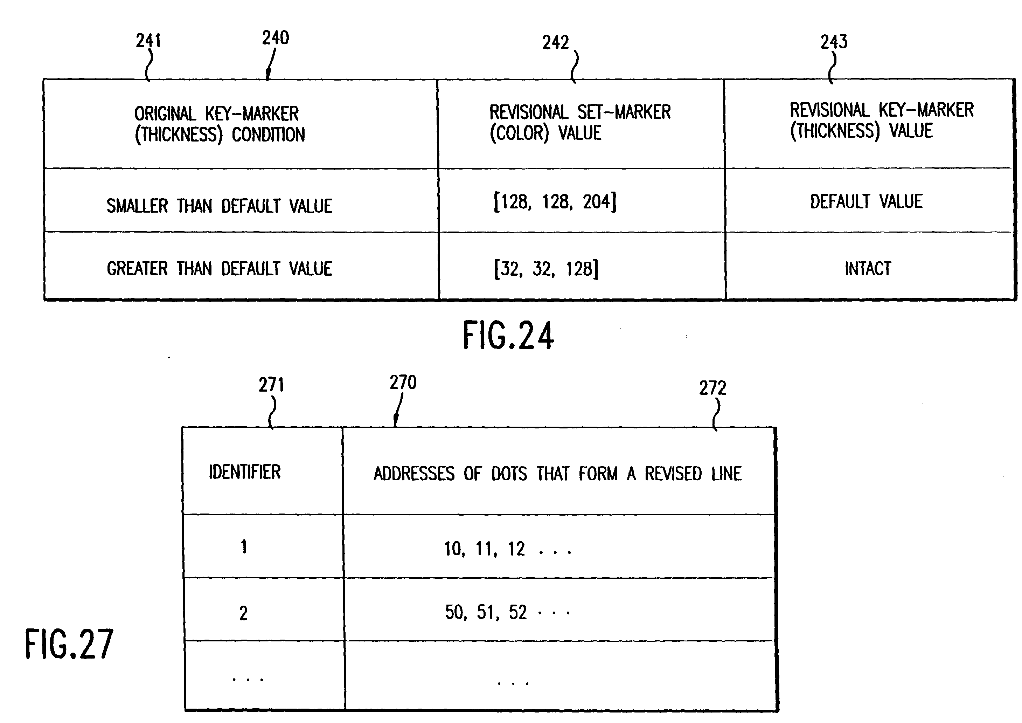

In this example of alteration in a scheme for emphasis and distinction of document lines, conversion information register 190 stores conversion data, which are sets of original key-marker values or conditions, revisional set-markers and key-marker values. Fig. 24 illustrates an example of the conversion table stored in the conversion information register 190. The conversion table 240 includes a original key-marker condition field 241, a revisional set-marker or color value field 242, and a revisional key-marker or thickness value field 243. Although the conversion table 240 has a 24-bit (3-byte) data structure for color information, it stores color information in terms of RGB code ranging from "0" to "255." The key-marker condition is whether the original line thickness is greater than or smaller than a default value.

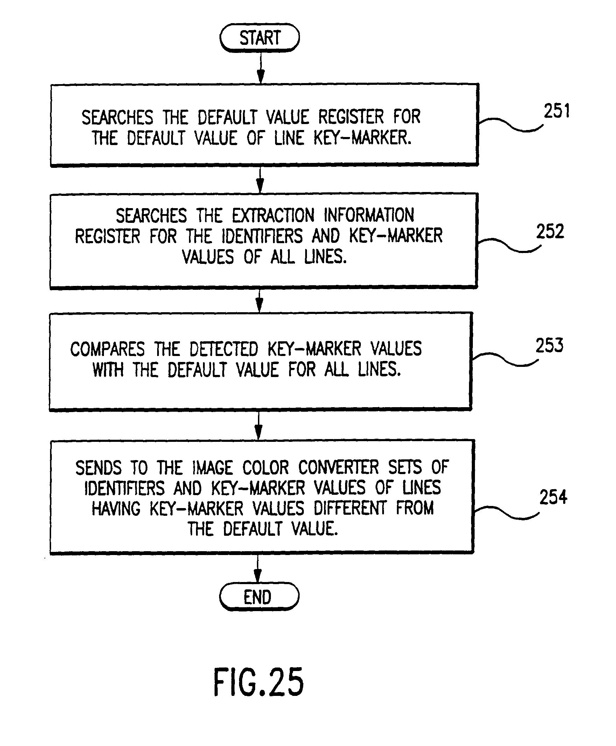

The operation of the discrimination processor 188 will now be explained. Fig. 25 is a flowchart for the process of the discrimination processor 188, which detects a difference of the extracted key-marker from a default value, and directs the image color converter 189 to convert image color.

Step 251 searches the default value register 187 for a default value of the key-marker for a line. Step 252 searches the extraction information register 186 for identifiers and key-marker values for all lines. Step 253 then compares detected key-marker values with a default value. Step 254 then sends sets of identifiers and key-marker values for lines that have key-marker values that are different from the default value to the image color converter 189.

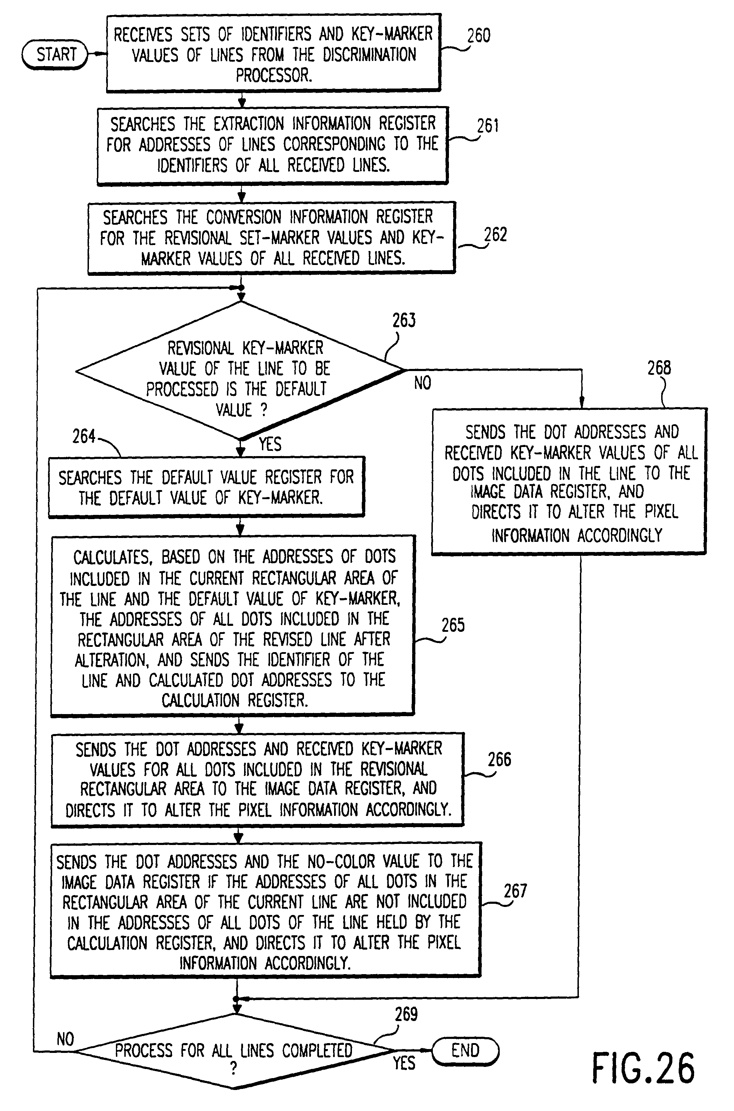

The image color converter 189 implements a line color conversion process for document image data stored in the image data register 182, based on information provided by the discrimination processor 188. Fig. 26 is a flowchart for a process of the image color converter 189. Step 260 receives sets of identifiers and key-marker values for lines. Step 261 searches the extraction information register 186 for addresses of lines that correspond to identifiers of all received lines. Step 262 then searches the conversion information register 190 for revisional set-marker values and key-marker values for all received lines.

Step 263 determines whether the revisional key-marker value is the default value for lines to be processed. If a revisional key-marker value is a default value, steps 264-267 are carried out. Otherwise, the process proceeds to step 268.

Step 264 searches the default value register 187 for a default value for a key-marker in a line. Step 265 calculates, based on the addresses of dots in the current rectangular area of a line and default value of key-marker, addresses of all dots in the rectangular area of the revised line. It also sends an identifier for the line and calculated dot addresses to the calculation register 191.

Step 266 sends the dot addresses and key-marker values for all dots in the revisional rectangular area, which were received in step 262 to the image data register 182. It also directs alteration of pixel information. If all dot addresses of the current rectangular area of line are not included in addresses for all dots for the line stored by the calculation register 191, step 267 then sends dot addresses and a no-color value to the image data register 182. Step 267 also directs alteration of pixel information. The sequence proceeds to step 269.

On the other hand, if a revisional key-marker value is not a default value for the line, the sequence proceeds to step 268. If the revisional key-marker value is not altered and intact, the dot addresses and received key-marker values for all dots included in the line are sent to the image data register 182. It also directs alteration of pixel information. The process then proceeds to step 269, which tests whether the process for all lines is complete. The process then returns to step 263, where the process is repeated for the next line, or terminates upon completion of all lines.

In this manner, the image color converter 189 converts line color of the document image data stored in the image data register 182, based on information provided by the discrimination processor 188. The calculation register 191, which is accessed by the image color converter 189, receives line identifier(s) and addresses for dots that are in the revisional rectangular area of the line that have that identifier. It also stores this information.

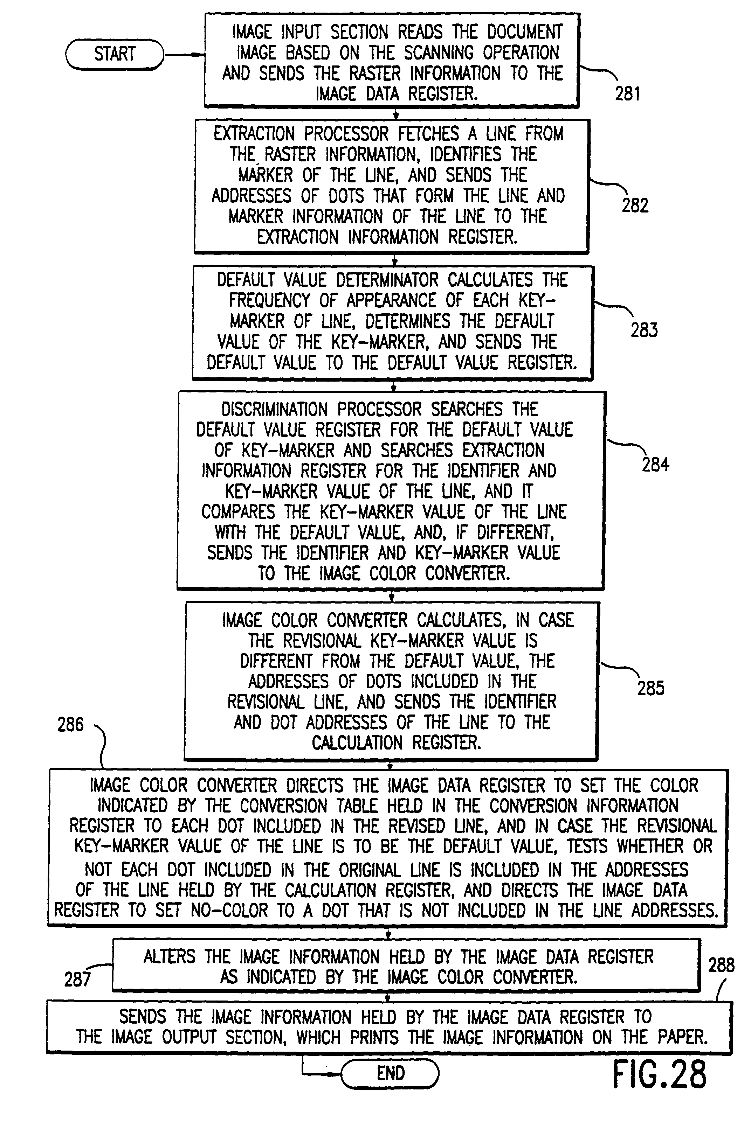

Fig. 27 illustrates an example of information stored by the calculation register 191. It includes an identifier 271 of the line and addresses 272 of dots that form the revisional line in a correspondence table of calculation information 270.

Next, operation of an emphasis scheme for alteration in digital color copy machine according to this embodiment will be explained. Fig. 28 is a flowchart for emphasis scheme alteration. A user, who intends to alter an emphasizing scheme for a document, places the document so it is read by the image input section 181. The user instructs the reading to start. Step 281 reads the document image based on the scanning operation, and transfers resulting raster information to the image data register 182. Step 282 retrieves a line from the raster information stored in the image data register 182; identifies the marker for the line; and transfers dot addresses that form the line and marker information for the line to the extraction information register 186.

Step 283 calculates a frequency of appearance for each key-marker of line; determines the default value of the key-marker, and sends a resulting default value of key-marker to the default value register 187. Next in step 284, the discrimination processor 188 searches the default value register 187 for a default value of key-marker and searches the extraction information register 186 for an identifier and key-marker value for the line. It compares a key-marker value for the line with a default value, and, if different, sends an identifier and key-marker value to the image color converter 189.

Step 285 calculates addresses of dots included in the revisional line when a revisional key-marker value differs from a default value. It also sends an identifier and dot addresses for the line to the calculation register 191.

Step 286 directs the image data register 182 to set a color indicated by the conversion table in the conversion information register 190 for each dot in the revisional line. When the revisional key-marker value of the line is a default value, step 286 tests whether each dot in the original line is in the addresses for the line stored by the calculation register 191. It then directs the image data register 182 to set "no-color" for a dot not in the line addresses.

Step 287 alters image information stored by the image data register 182, as indicated by the image color converter 189. Step 288 sends image information stored by the image data register 182 to the image output section 183, which prints image information on a sheet of paper.

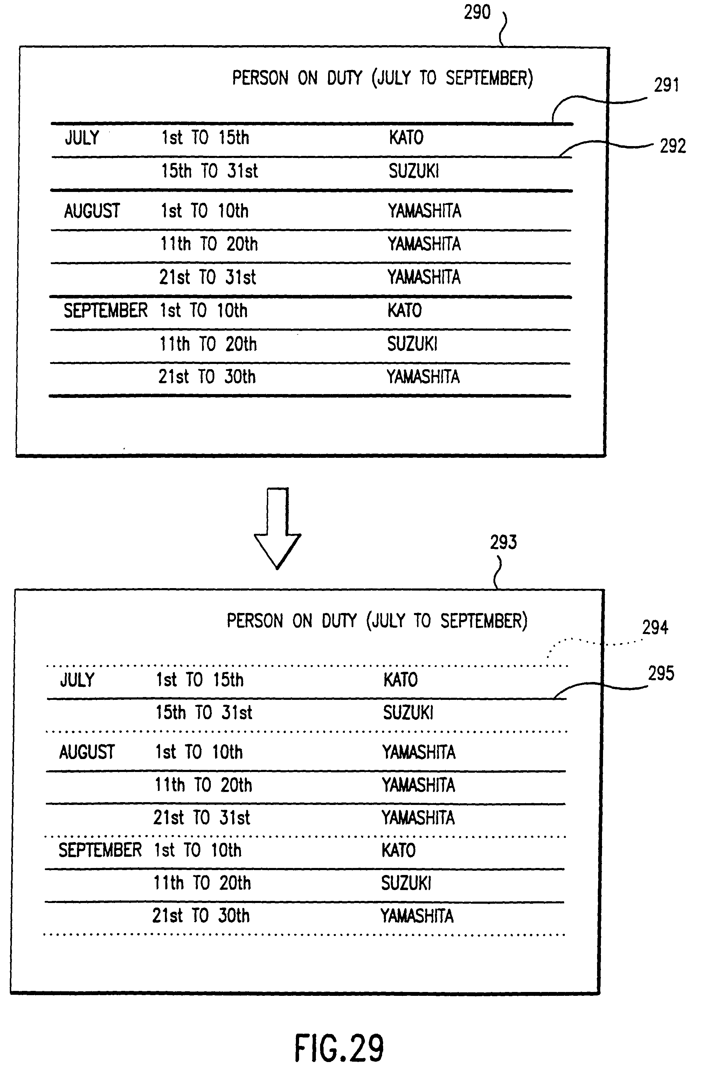

The following is an explanation of variations of a document as a result of an alteration of an emphasizing scheme. Fig. 29 explains switching of an emphasizing scheme from a line thickness to a line color scheme for a document. An original monochrome document 290, shown in the upper section of Fig. 29, has lines of two thickness. Based on a calculation, a smaller line thickness is designated as a default value of a key-marker. The converting process for the document image is based on a conversion table as shown in Fig. 24, and yields a document 293 shown in a lower section of the Fig. 29. Specifically, for an original document 290 including thicker lines 291 and thinner lines 292, the thinner lines 292 that have a thickness for a default value are left unchanged thickness and color, whereas the thicker lines 291 have their color altered to R = 32, G = 32 and B = 128, with the thickness being left. This is based on the conversion table 240 and results for lines 294. The color and shape of characters are not altered.

Accordingly, a digital color copy machine according to this embodiment enables a user to easily switch a scheme for emphasis and distinction of frames in tables, or bars of graphs in a document from a line thickness scheme to a line color scheme. Alternatively, it permits a line color scheme to be added to a line thickness scheme. The digital color copy machine of this embodiment can be modified as follows.

### (1) Key-marker of line.

The key-marker for lines may include a type of line, such as solid, dashed, dash-dot, etc. besides thickness of line. The type of line is determined based on a positional relation between rectangular areas filled with dots. The extraction information register 186 receives a value for a key-marker from the extraction processor 184 and stores it.

### (2) Determination of the default value of line marker.

The default value of line marker may be determined based on a weighted summation of line lengths, instead of a simple summation.

### (3) Conversion table stored by the conversion information register 190.

The conversion table may classify thickness of line in terms of a difference from a default value, instead of determining whether the line thickness is merely greater than or less than the default value, as in Fig. 24.

The digital color copy machine according to the fifth embodiment, which processes image data and the document processing system of the first embodiment, have similar and corresponding system components, as follows. The image data register 182 and extraction information register 186 correspond to the element register 12, the extraction processor 184, default value determinator 185 and discrimination processor 188 corresponds to the search processor 15, and the image color converter 189, conversion information register 190 and calculation register 191 corresponds to the setting processor 17 and setting scheme register 18.

In contrast to switching a scheme for emphasis and distinction of lines with different thicknesses from a default value to a multicolor scheme in a digital color copy machine according to the fifth embodiment, an alternative arrangement in the sixth embodiment switches from a multicolor scheme to a multi-shape scheme of lines with colors having different default values. Thus, a document having a multicolor scheme for emphasis and distinction can be clearly emphasized, even in a monochrome document.

The digital color copy machine of the sixth embodiment processes image data, and processes pixel data in a manner similar to the fifth embodiment. A key-marker is a line color and a set-marker is a line thickness. The marker for lines is line thickness, and the line is formed by a shorter side-length of a rectangular area filled with dots.

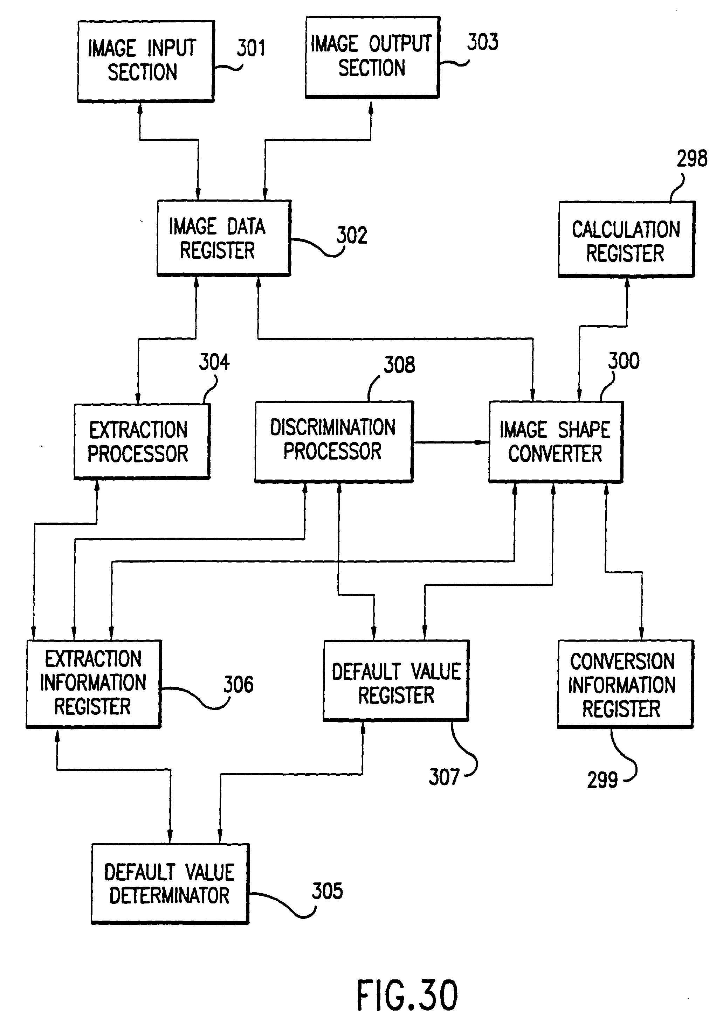

Fig. 30 is a schematic block diagram of major system components for the document processing system on digital color copy machine according to the sixth embodiment. The system includes a calculation register 298, a conversion information register 299, an image shape converter 300, an image input section 301, an image data register 302, an image output section 303, an extraction processor 304, a default value determinator 305, an extraction information register 306, a default value register 307, and a discrimination processor 308. The image input section 301, image data register 302, image output section 303, extraction processor 304, default value determinator 305, extraction information register 306, default value register 307, discrimination processor 308, image shape converter 300, conversion information register 299 and calculation register 298 correspond and as substantially similar to the image input section 181, image data register 182, image output section 183, extraction processor 184, default value determinator 185, extraction information register 186, default value register 187, discrimination processor 188, image color converter 189, conversion information register 190 and calculation register 191 of the fifth embodiment.

The digital color copy machine of the sixth embodiment differs from the fifth embodiment, as the image shape converter 300 replaces the image color converter 189. Additionally, the conversion information register 299, default value register 307, extraction processor 304 and extraction information register 306 store values or data different from those of the fifth embodiment because of different key-markers and set-markers, although their functions are substantially similar.

The image shape converter 300, which is a system component of this digital color copy machine, will now be explained. A default value register 307 stores information "color" as a key-marker for a line. It receives default value of line key-marker, e.g., R = 128, G = 128 and B = 140, from a default value determinator 305, and stores this value.

In the digital color copy machine of the sixth embodiment, which alters a scheme for emphasis and distinction of lines in a document image from a line color to a line thickness, the conversion information register 299 stores conversion data, which are sets of the original values or conditions for a key-marker, information for a revisional set-marker and key-marker values that are an indication as to whether the key-marker is to be a default value.

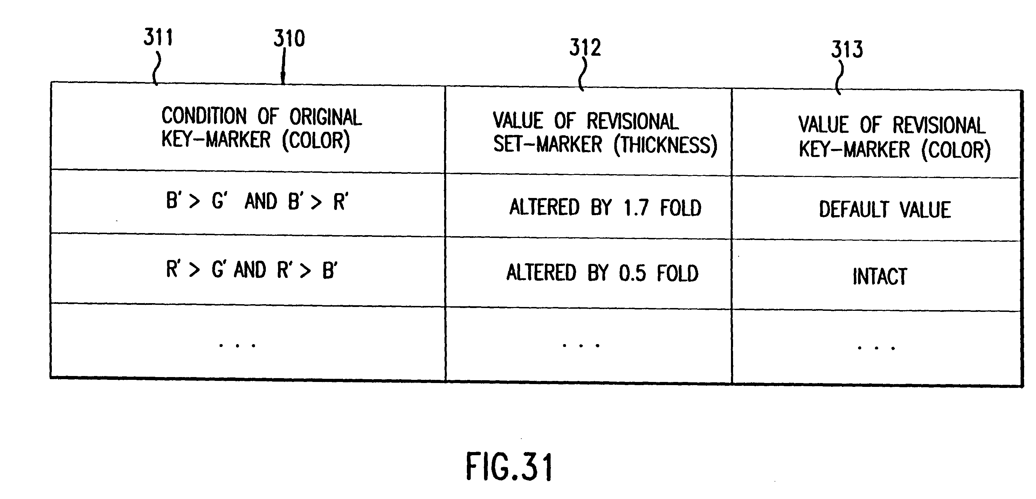

Fig. 31 shows an example of a conversion table in the conversion information register 299. The conversion table 310 includes a condition field 311, which stores an original key-marker or color information; a shape value field 312, which stores a revisional value of setting form on thickness; and a color value field 313, which stores a revisional key-marker value or color. The conversion table 310 uses the comparison of a difference of RGB values between an original color and a default value for the original key-marker of color information. In the following explanation, with regard to "RGB" value, B' denotes the result of subtraction of the default value B from the original color value B, and R' and G' are similar.

The extraction processor 304 determines a value of line color, similar to the extraction processor 184 according to the fifth embodiment. It sends a line color value to the extraction information register 306.

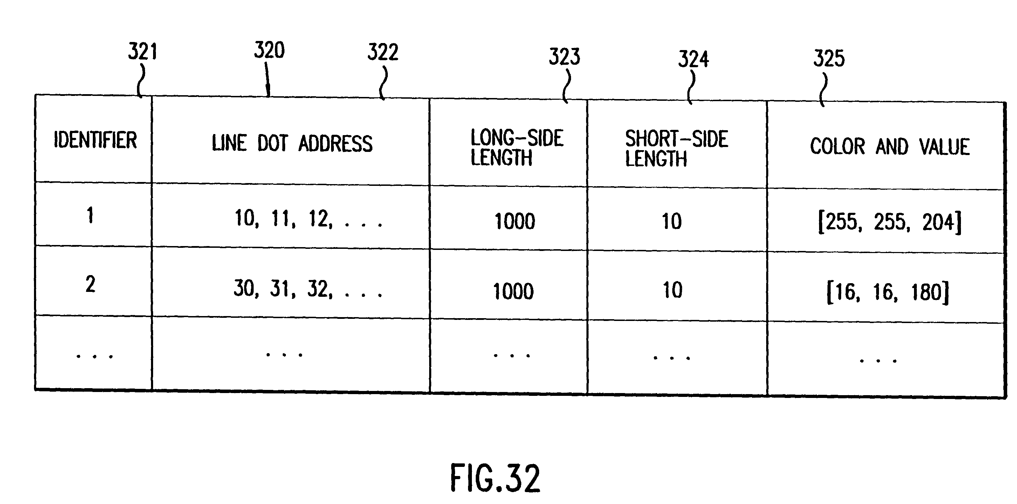

Fig. 32 explains the data structure of a data table 320, which stores line information extracted by the extraction processor 304 and stored by the extraction information register 306. The data table 320 includes an identifier field 321, an address field 322, a long-side length field 323, a short-side length field 324, and a color information field 325. The addresses of dots, which form a line, long-side and short-side lengths of a rectangular area for the line, and its color data are stored in a row of the table 320. Specifically, the identifier field 321 stores an identifier, appended to each line; the address field 322 stores addresses of dots of the line; the long-side length field 323 stores a long-side length for a rectangular area of the line; the short-side length field 324 stores a short-side length for the line area, and the color information field 325 stores a value for line color. Although the table 320 has a 24-bit or 3-byte data structure for color information, it can store color information in terms of an RGB code ranging from 0 to 255, as discussed above.

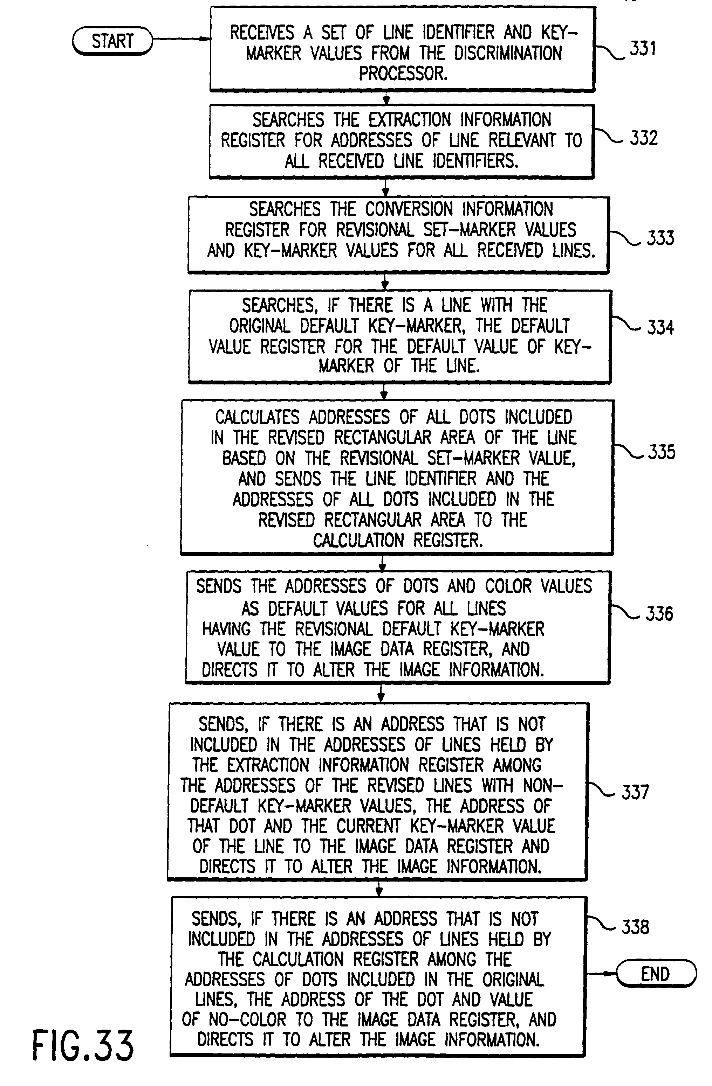

The image shape converter 300 implements a process to convert color of a line image for document image data stored in the image data register 302, based on information provided by the discrimination processor 308. Fig. 33 shows a flowchart for the process of the image shape converter 300.

Step 331 receives a line identifier set and key-marker value from the discrimination processor 308. Step 332 searches the extraction information register 306 for addresses of a line relevant to all received line identifiers. Step 333 searches the conversion information register 299 for revisional set-marker values and key-marker values for all received lines.

If a line with an original default key-marker exists, step 334 searches the default value register 307 for a default value of key-marker for the line. Next, step 335 calculates addresses for all dots included in the revised rectangular area of the line, based on a revisional set-marker value, and sends a line identifier and addresses for all dots in the revisional rectangular area to the calculation register 298.

Step 336 then sends addresses of dots and color values as default values for all lines having the revisional default key-marker value to the image data register 302. It directs alteration of the image information. If an address exists that is not in addresses stored by the extraction information register 306, step 337 sends the address for that dot, and a current key-marker value of the line to the image data register 302. It then directs alteration of the image information.

If an address exists that is not in addresses stored by the calculation register 298, step 338 sends the address for that dot, and a value of no-color to the image data register 302. It then directs alteration the image information.

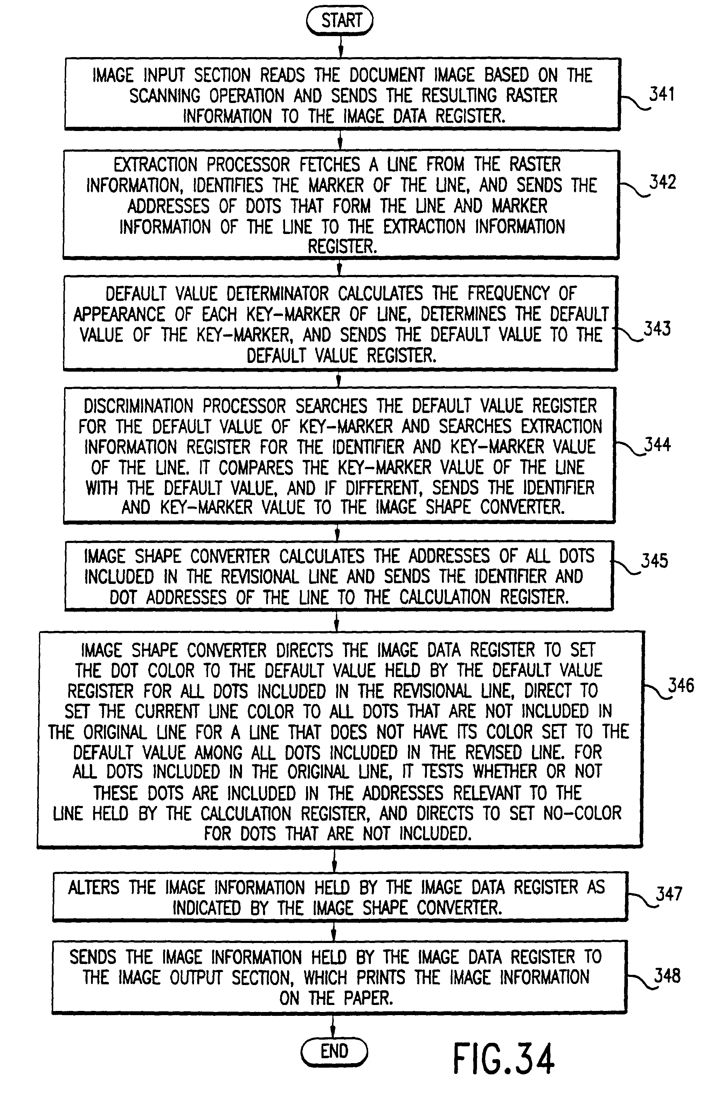

Next, an operation for emphasis scheme alteration by the digital color copy machine according to this embodiment will be explained by an example. Fig. 34 is a flowchart for an emphasis scheme alteration, based on the sixth embodiment. A user, who intends to alter an emphasizing scheme from a color scheme to a line thickness scheme for a color document, places a document so it is read by the image input section 301. The reading of document starts the process. Step 341 first reads the document image, based on a scanning operation, and transfers resulting raster information to the image data register 302.

Step 342 retrieves a line from the raster information stored in the image data register 302, identifies a marker of the line, and transfers addresses of dots that form the line and marker information of the line to the extraction information register 306. Step 343 calculates a frequency of appearance for each line key-marker, determines a default value of the key-marker, and sends a resulting default value of a key-marker to the default value register 307.

Next, step 344 searches the default value register 307 for a default value of a key-marker and searches extraction information register 306 for an identifier and key-marker value of the line. It then compares the key-marker value of the line with the default value. If different, it sends the identifier and key-marker value to the image shape converter 300.

Step 345 then calculates addresses for all dots in a revisional line. It sends an identifier and dot addresses for the line to the calculation register 298. Step 346 then directs the image data register 302 to set dot color to a default value stored by the default value register 307 for all dots in the revisional line. For a line that is not set to a default value, step 346 directs a current line color to be set for all dots, included in the revisional line, not included in the original line. For all dots in the original line, step 346 determines whether these dots are in addresses relevant to the line stored by the calculation register 298, and directs no-color for dots that are not included.

Step 347 then alters image information stored by the image data register 302, as indicated by the image shape converter 300. Step 348 sends image information stored by the image data register 302 to the image output section 303, which prints the image information on a sheet of paper.

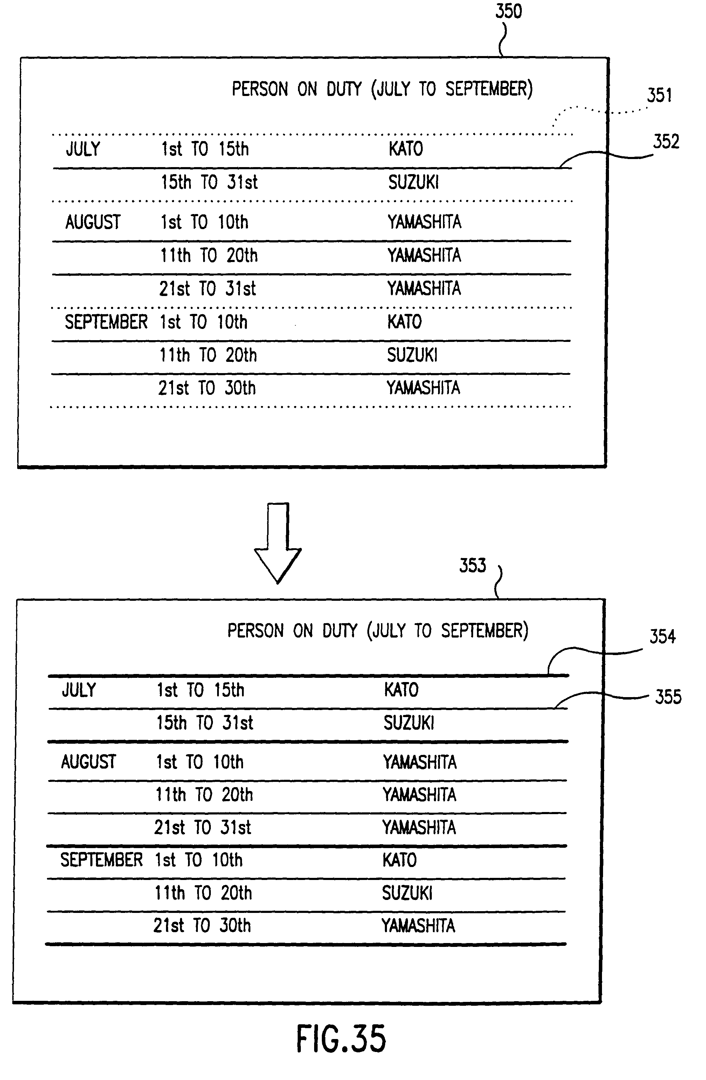

The following is an explanation of a variation of a document as a result of an alteration for emphasizing scheme to a line thickness scheme. Fig. 35 is an example of switching an emphasizing scheme for a document from a line color scheme to a line thickness scheme. An original color document 350 is shown in an upper section of the figure, and uses lines of two different colors. As a result of a line length calculation, lines 351 with RGB values 128, 128 and 140 are longer than lines 352 with RGB values 25, 25 and 180. Therefore, the RGB values of lines 351 are designated as a default value.

The converting process for the document image is based on a conversion table having a setting shown in Fig. 31. It yields a document 353 as shown in the lower section of Fig. 35. As seen on the original document 350 and revised document 353, lines 352 having default RGB values 128, 128 and 140 in the original document 350 are unchanged in color and thickness in the revised document 353. Whereas, the lines 351 having default RGB values 25, 25 and 180 are altered to a default color of R = 128, G = 128 and B = 140, and increased in thickness of 1.7 times, based on a data set for the conversion table 310 in the revised document 353. Characters themselves are not altered.

Accordingly, a digital color copy machine according to the sixth embodiment enables a user to easily switch a scheme for emphasis and distinction for frames of tables or bars of graphs in a document from a line color scheme to a line thickness scheme. It can also add a line thickness scheme to a line color scheme. The digital color copy machine of the sixth embodiment can be modified, as follows.

### (1) Set-marker of line.

The set-marker of line may include a type of line, either solid, dashed, dash-dot, etc., in addition to a thickness of line.

### (2) Conversion table stored by the conversion information register 299.

The conversion table 310 may classify color information in terms of a polarity of RGB values between the original color and default color, instead of differential values between the RGB values of an original color and default color.

In the fifth and sixth embodiments, a correspondence of the original key-marker values and revisional set-markers and key-marker values is determined by a conversion table 240, 310 stored by the conversion information register 190, 299. An alternative arrangement is to allow a user to instruct correspondence. In this case, the system is provided with a component for user interface to display a user entry field on the screen and transfer a user's input instruction to the image shape converter 300 or image color converter 189. Thus, the conversion information register 190 or 299 is not required.

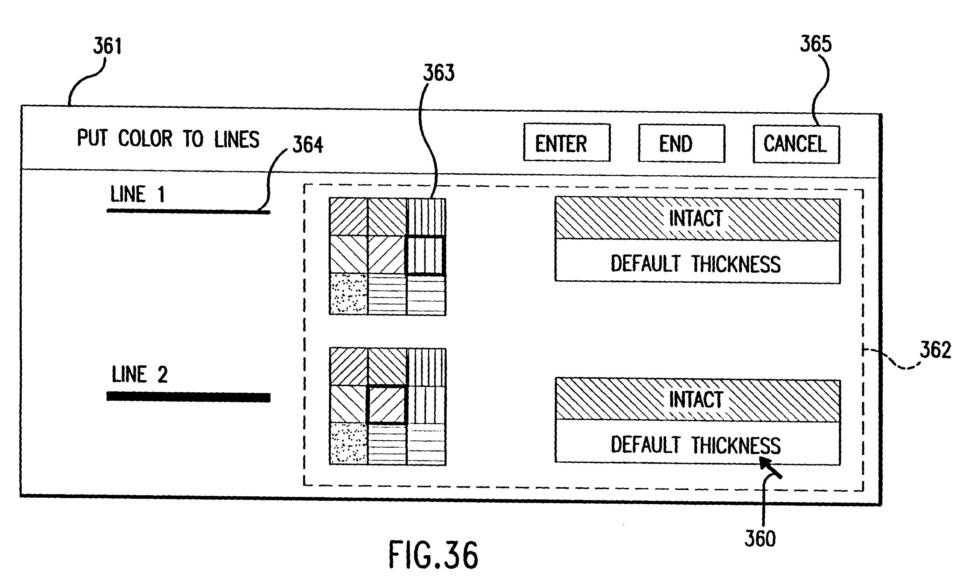

Fig. 36 shows an example for a user interface screen created by a system component, which provides the interface function that allows a user to enter an original key-marker value, revisional set-marker and key-marker value. The user interface screen 361 includes a user entry field 362. A list 364 of original values for key-marker or line thickness is displayed on a left side. A user enters a revisional set-marker or line color and key-marker value or line thickness in correspondence to a listed value. Color patches 363 are displayed to allow a user to select a color.

Although the copy machines of the fifth and sixth embodiments implement conversion of the color and shape of lines that are parallel to or perpendicular to a scanning direction, it is also possible to process oblique lines. In this case, the system is provided with additional components to implement a process to extract a rectangular area which forms an oblique line, to extract a rectangular area of line and calculate its long-side and short-side lengths, determine the side lengths of the rectangular area, alter the area.

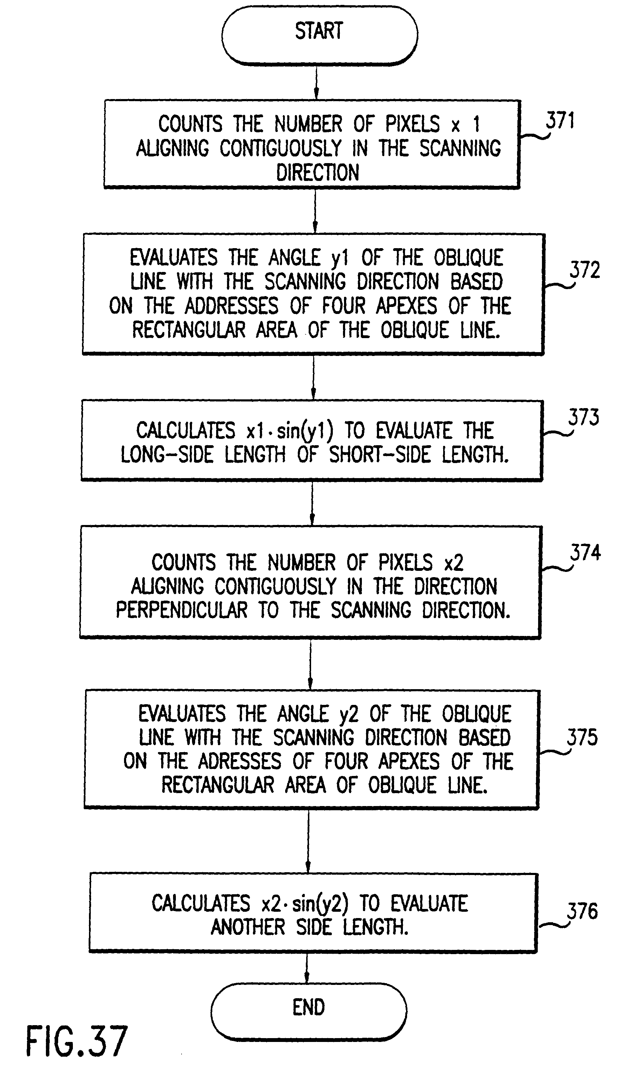

A system component for extracting a rectangular area, which forms an oblique line, will now be explained. A rectangular area with an oblique line is extracted based on a sequential process of detecting for each black pixel as to whether the four adjacent pixels are black. Fig. 37 is a flowchart for the process of evaluating the side lengths of a rectangular area with an oblique line. Step 371 counts a number of pixels x1 contiguously aligned in a scanning direction. Step 372 evaluates an angle y1 of the oblique line with the scanning direction based on addresses of four apexes of the rectangular area for the oblique line. Step 373 calculates x1·sin(y1) to evaluate a long-side length or short-side length.

The process for calculation of a direction perpendicular to the scanning direction is repeated to evaluate another side length. Specifically, step 374 counts the number of pixels x2 contiguously aligned in a direction perpendicular to the scanning direction. Next, step 375 evaluates an angle y2 of the oblique line with the scanning direction based on addresses of four apexes of the rectangular area for the oblique line. Step 375 then calculates x2·sin(y2) to evaluate another side length.

To alter a rectangular area of an oblique line, the address of a revised area can be calculated from the side angles and lengths of the rectangular area. Accordingly, a copy machine according to the fifth and sixth embodiments, which is designed to switch or add a scheme for emphasis and distinction for lines of tables and bars of graphs running in a scanning direction or perpendicular to this direction, is capable of performing this function for oblique lines, such as polygonal graphs, by a provision of an extraction processor, which extracts a rectangular area of oblique line, as described above.

The digital color copy machines of the fifth and sixth embodiments can include a system component to determine a default value of a set-marker, based on the document image. This the image color converter 189 or image shape converter 300 can designate revisional set-marker values, other than a default value for document elements. Consequently, document elements with key-markers, other than the default value, will have a higher probability of revisional set-markers other than the default value. Whereby, emphasis and distinction of document elements can be clarified.

This variation is particularly effective in the determination of revisional set-markers by a user. Default values of set-markers prepared in advance, are displayed to prompt a user to specify values other than default values. For example, in a user interface screen shown in Fig. 36, colors of set-markers, excluding the default value or color, are displayed as color patches.

The digital color copy machines of the fifth and sixth embodiments can be modified to determine the default value of set-marker based on the document image as follows:
(1) The extraction processor 184, 304 determines a set-marker value concurrently with a determination of a key-marker value during extraction of a line. The value of the set-marker, when it is the line thickness or color, is determined as in the preceding embodiments;
(2) The system additionally includes components determining a default value of set-marker and storing the default value, such as a default value determinator 185, 305 and default value register 187, 307. Calculations carried out by these system components are basically similar to the default value determinator 185, 305, and default value register 187, 307, except that they process a set-marker instead of key-marker; of
(3) The image color converter 189 or image shape converter 300 can determine a revisional set-marker value based on an instruction entered by a user or a search of the conversion information register 190, 299, by excluding a default value of set-marker.

Based on these modifications, the digital color copy machines according to the fifth and sixth embodiments can determine a default value for a set-marker based on document image. They can allow a user to switch or add a scheme for emphasis and distinction of a document image based on data retrieved from the document without requiring of prior data setting. This results in a clear print on the document image.

As described above, the document processing system can operate by switching or adding schemes for emphasis and distinction, including a monochrome multi-shape scheme and multicolor scheme through correspondence between an original and revisional color and shape information. Consequently, even if an input device and output device of a document creating system do not consistently function regarding character shape and color, a user can fully use their input and output functions.

## Claims

1. A document processing system for processing documents being composed of document elements such as a character or a line of a figure, comprising:
first information determining a first visual feature of a document element,
second information determining a second visual feature of said document element,
element information register means (12; 92; 132; 182; 302) which holds the first information and the second information which determine the visual features of said document element;
first default value register means (16; 96; 136; 187; 307) which holds a default value of the first information;
discrimination means (15; 95, 135; 188; 308) which detects whether or not the first information of said document element held by said element information register means is different from the default value; and
setting means (17; 97; 137; 139; 189) which alters the second information for said document element when said document element has first information different from the default value.

2. A document processing system according to claim 1, comprising:
second default value register means which holds a default value of the second information, wherein said setting means (17; 97; 137; 139; 189) alters the second information for a document element to the default value of the second information when that document element has first information different from the default value of the first information.

3. A document processing system according to any one of the preceding claims, wherein said setting means (17; 97; 137; 139; 189) sets the second information for a document element having first information different from the default value and also sets the first information for said document element as a default value.

4. A document processing system according to any one of the preceding claims, further comprising document layout means (13; 93; 133; 183) which alters a layout for a document element in response to an alteration of one or more of first information and second information for a document element.

5. A document processing system according to any of the preceding claims, further comprising analysis means which determines a default value for the first information using the first information stored in said element information register means and which also determines a default value for the second information using the second information stored in said element information register means (12; 92; 132; 182; 302).

6. A document processing system according to any one of the preceding claims, wherein said setting means (17; 97; 137, 139; 189) lets a user interactively specify a correspondence between the first information and the second information prior to any alteration, and between the first information and second information after any alteration.

7. A document processing system according to any one of the preceding claims, further comprising setting register means (18; 98; 138; 188) which stores information that indicates a correspondence between the first information and the second information prior to any alteration, and between the first information and second information after any alteration,
wherein said setting means (17; 97; 137, 139; 189) provides a setting using information stored by said setting register means (18; 98; 138; 188).

8. A document processing system according to any one of the preceding claims, wherein a document element is a character and/or a line of either a figure or a table.

9. A document processing system according to any one of the preceding claims, wherein the information that determines the visual feature for a document element is the shape and/or color of either a character and/or line.

10. A document processing system according to any one of the preceding claims, wherein the first information which determines the visual feature for a document element represents the shape or color for the document element and the second information which determines the visual feature for the document element represents the other of the color and the shape of the document element, but not the same visual feature as for the first information.

11. Use of a system according to any of the preceding claims for switching emphasis schemes.

## Patentansprüche

1. Dokumentverarbeitungssystem zum Verarbeiten von Dokumenten, die aus Dokumentelementen wie etwa einem Zeichen oder einer Linie einer Figur zusammengesetzt sind, mit:
erster Information, die ein erstes visuelles Merkmal eines Dokumentelementes bestimmt,
zweiter Information, die ein zweites visuelles Merkmal des Dokumentelementes bestimmt,
einer Elementinformationsregistereinrichtung (12; 92; 132; 182; 302), die die erste Information und die zweite Information speichert, die die visuellen Merkmale des Dokumentelementes bestimmen;
einer ersten Defaultwert-Registereinrichtung (16; 96; 136; 187; 307), die einen Defaultwert der ersten Information enthält;
einer Unterscheidungseinrichtung (15; 95; 135; 188; 308), die erfasst, ob die in der Elementinformationsregistereinrichtung enthaltene erste Information des Dokumentelementes vom Defaultwert verschieden ist; und
einer Einstelleinrichtung (17; 97; 137; 139; 189), die die zweite Information für das Dokumentelement ändert, wenn das Dokumentelement von dem Defaultwert verschiedene erste Information aufweist.

2. Dokumentverarbeitungssystem nach Anspruch 1, mit:
einer zweiten Defaultwert-Registereinrichtung, die einen Defaultwert der zweiten Information enthält, wobei die Einstelleinrichtung (17; 97; 137; 139; 189) die zweite Information für ein Dokumentelement auf den Defaultwert der zweiten Information ändert, wenn das Dokumentelement vom Defaultwert der ersten Information verschiedene erste Information umfasst.

3. Dokumentverarbeitungssystem nach einem der vorhergehenden Ansprüche, bei dem die Einstelleinrichtung (17; 97; 137; 139; 189) die zweite Information für ein Dokumentelement mit vom Defaultwert verschiedener erster Information einstellt und außerdem die erste Information für das Dokumentelement auf einen Defaultwert einstellt.

4. Dokumentverarbeitungssystem nach einem der vorhergehenden Ansprüche, mit einer Dokumentlayouteinrichtung (13; 93; 133; 183), die ein Layout für ein Dokumentelement in Reaktion auf eine Änderung der ersten und/oder der zweiten Information für ein Dokumentelement ändert.

5. Dokumentverarbeitungssystem nach einem der vorhergehenden Ansprüche, mit einer Analyseeinrichtung, die einen Defaultwert für die erste Information unter Verwendung der in der Elementinformationsregistereinrichtung gespeicherten ersten Information bestimmt und ferner einen Defaultwert für die zweite Information unter Verwendung der in der Elementinformationsregistereinrichtung (12; 92; 132; 182; 302) gespeicherten zweiten Information bestimmt.

6. Dokumentverarbeitungssystem nach einem der vorhergehenden Ansprüche, bei dem die Einstelleinrichtung (17; 97; 137; 139; 189) einen Benutzer interaktiv eine Entsprechung zwischen der ersten Information und der zweiten Information vor jeglicher Änderung und zwischen der ersten Information und der zweiten Information nach jeglicher Änderung spezifizieren läßt.

7. Dokumentverarbeitungssystem nach einem der vorhergehenden Ansprüche, ferner mit einer Einstellregistereinrichtung (18; 98; 138; 188), die Information speichert, die eine Entsprechung zwischen der ersten Information und der zweiten Information vor irgendeiner Änderung und zwischen der ersten Information und der zweiten Information nach irgendeiner Änderung angibt, wobei die Einstelleinrichtung (17; 97; 137; 139; 189) eine Einstellung unter Verwendung von von der Einstellregistereinrichtung (18; 98; 138; 188) gespeicherter Information liefert.

8. Dokumentverarbeitungssystem nach einem der vorhergehenden Ansprüche, bei dem ein Dokumentelement ein Zeichen und/oder eine Linie einer Figur oder einer Tabelle ist.

9. Dokumentverarbeitungssystem nach einem der vorhergehenden Ansprüche, bei dem die Information, die das visuelle Merkmal für ein Dokumentelement festlegt, die Gestalt und/oder Farbe eines Zeichens und/oder einer Linie ist.

10. Dokumentverarbeitungssystem nach einem der vorhergehenden Ansprüche, bei dem die erste Information, die das visuelle Merkmal für ein Dokumentelement festlegt, die Gestalt oder Farbe für das Dokumentelement darstellt, und die zweite Information, die das visuelle Merkmal für das Dokumentelement festlegt, entweder die Gestalt oder die Farbe des Dokumentelementes aber nicht das gleiche visuelle Merkmal wie die erste Information darstellt.

11. Verwendung eines Systems nach einem der vorhergehenden Ansprüche zum Umschalten von Betonungsschemata.

## Revendications

1. Système de traitement de documents pour traiter des documents constitués d'éléments de document tels qu'un caractère ou une ligne d'une figure, comprenant :
une première information déterminant une première caractéristique visuelle d'un élément de document,
une deuxième information déterminant une deuxième caractéristique visuelle dudit élément de document,
un moyen formant registre (12; 92; 132; 182; 302) d'informations d'élément qui conserve la première information et la deuxième information qui déterminent les caractéristiques visuelles dudit élément de document;
un premier moyen formant registre (16; 96; 136; 187; 307) de valeur par défaut qui conserve une valeur par défaut de la première information;
un moyen de discrimination (15; 95; 135; 188; 308) qui détecte si la première information dudit élément de document conservée par ledit moyen formant registre d'informations d'élément est différente ou non de la valeur par défaut; et
un moyen d'ajustement (17; 97; 137; 139; 189) qui modifie la deuxième information pour ledit élément de document lorsque la première information dudit élément de document est différente de la valeur par défaut.

2. Système de traitement de documents selon la revendication 1, comprenant :
un deuxième moyen formant registre de valeur par défaut qui contient une valeur par défaut de la deuxième information, ledit moyen d'ajustement (17; 97; 137; 139; 189) modifiant la deuxième information pour un élément de document, en la faisant passer à la valeur par défaut de la deuxième information, lorsque la première information de cet élément de document est différente de la valeur par défaut de la première information.

3. Système de traitement de documents selon l'une quelconque des revendications précédentes, dans lequel ledit moyen d'ajustement (17; 97; 137; 139; 189) ajuste la deuxième information pour un élément de document dont la première information est différente de la valeur par défaut et ajuste également la première information pour ledit élément de document comme valeur par défaut.

4. Système de traitement de documents selon l'une quelconque des revendications précédentes, comprenant en outre un moyen de mise en page (13; 93; 133; 183) de document qui modifie une mise en page pour un élément de document en réponse à une modification d'une ou plusieurs information(s) parmi une première information et une deuxième information pour un élément de document.

5. Système de traitement de documents selon l'une quelconque des revendications précédentes, comprenant en outre un moyen d'analyse qui détermine une valeur par défaut pour la première information en utilisant la première information mémorisée dans ledit moyen formant registre d'informations d'élément et qui détermine aussi une valeur par défaut pour la deuxième information en utilisant la deuxième information mémorisée dans ledit moyen formant registre (12; 92; 132; 182; 302) d'informations d'élément.

6. Système de traitement de documents selon l'une quelconque des revendications précédentes, dans lequel ledit moyen de positionnement (17; 97; 137; 139; 189) permet à un utilisateur d'imposer une correspondance entre la première information et la deuxième information avant toute modification, et entre la première information et la deuxième information après toute modification.

7. Système de traitement de documents selon l'une quelconque des revendications précédentes, comprenant en outre un moyen formant registre d'ajustement (18; 98; 138; 188) qui mémorise une information qui indique une correspondance entre la première information et la deuxième information avant toute modification, et entre la première information et la deuxième information après toute modification,
dans lequel ledit moyen d'ajustement (17; 97; 137; 139; 189) effectue un ajustement en utilisant l'information mémorisée par ledit moyen formant registre d'ajustement (18; 98; 138; 188).

8. Système de traitement de documents selon l'une quelconque des revendications précédentes, dans lequel un élément de document est un caractère et/ou une ligne soit d'une figure, soit d'un tableau.

9. Système de traitement de documents selon l'une quelconque des revendications précédentes, dans lequel l'information qui détermine la caractéristique visuelle pour un élément de document est la forme et/ou la couleur d'un caractère et/ou d'une ligne.

10. Système de traitement de documents selon l'une quelconque des revendications précédentes, dans lequel la première information qui détermine la caractéristique visuelle pour un élément de document représente la forme ou la couleur pour l'élément de document et la deuxième information qui détermine la caractéristique visuelle pour l'élément de document représente l'autre caractéristique, couleur ou forme, de l'élément de document, mais pas la même caractéristique visuelle que pour la première information.

11. Utilisation d'un système conforme à l'une quelconque des revendications précédentes pour faire basculer des combinaisons de mise en relief.
